# EUROPÄISCHE PATENTSCHRIFT

(11) **EP 3 558 602 B1**
(45) Veröffentlichungstag und Bekanntmachung des Hinweises auf die Patenterteilung: **23.09.2020**
(21) Anmeldenummer: 17808322.6
(22) Anmeldetag: 24.11.2017
(51) Int. Cl.: B25J 13/06

(54) **ROBOTERSTEUERPULT MIT EINEM ZUSÄTZLICHEN HALTER FÜR EINEN TABLET-COMPUTER**
ROBOT CONTROL PANEL WITH AN ADDITIONAL HOLDER FOR A TABLET COMPUTER
PANNEAU DE COMMANDE DE ROBOT AVEC SUPPORT SUPPLÉMENTAIRE POUR UN ORDINATEUR TABLETTE

(30) Priorität: 20.12.2016 DE 102016225687
(43) Veröffentlichungstag der Anmeldung: 30.10.2019
(73) Patentinhaber: KUKA Deutschland GmbH, 86165 Augsburg (DE)
(72) Erfinder: RIEDEL, Martin, 86165 Augsburg (DE)
(74) Vertreter: Tillmann, Axel
(86) Internationale Anmeldenummer: PCT/EP2017/001367
(87) Internationale Veröffentlichungsnummer: WO 2018/114031

(56) Entgegenhaltungen:
- WO-A1-01/71878
- DE-B3-102015 206 578
- US-A1- 2016 114 478

## Beschreibung

Die Erfindung betrifft ein Robotersteuerpult, aufweisend einen ersten Halter, der zum formschlüssigen Aufnehmen eines aus dem Robotersteuerpult entnehmbaren, separat tragbaren Roboter-Bedienhandgeräts ausgebildet ist.

Die DE 10 2010 025 781 A1 beschreibt eine tragbare Sicherheitseingabeeinrichtung mit wenigstens einem Eingabemittel zum Eingeben eines Sicherheitssignals an eine Robotersteuerung, welche eine Schnittstelle aufweist zur Kommunikation mit einem mit der Sicherheitseingabeeinrichtung, insbesondere lösbar, verbundenen Handgerät zum Steuern eines Roboters mittels Kommunikation mit dieser Robotersteuerung.

Die WO 2013/029 658 A1 beschreibt einen Industrieroboter mit einer Robotersteuerung, an welche eine Zustimmeinrichtung über eine erste Signalleitung zur Signalübertragung angeschlossen ist. Ein von der Zustimmeinrichtung separat ausgebildetes Bedienhandgerät ist über eine zweite Signalleitung mit der Zustimmeinrichtung zur Signalübertragung verbunden. Die Zustimmeinrichtung kann dabei eine physikalische Anschlussstelle aufweisen, an die das Bedienhandgerät manuell lösbar mechanisch befestigt werden kann, so dass in einem Zusammengefügten Zustand die Zustimmeinrichtung mit dem Bedienhandgerät eine Baueinheit bildet.

Die DE 10 2015 206 578 B3 zeigt ein Roboter-Bedienhandgerät mit einem Gehäuse und einem Griff, wobei das Bedienhandgerät in ein Aufnahme an einem Roboter einsetzbar ist. Das Gehäuse weist ferner eine Aufnahme für ein elektronisch kommunizierendes Gerät auf.

Aufgabe der Erfindung ist es, die manuelle Steuerung und die Programmierung eines Roboters mittels eines Roboter-Bedienhandgeräts zu verbessern, insbesondere ergonomischer zu machen.

Die Aufgabe der Erfindung wird gelöst durch ein Robotersteuerpult, aufweisend:
- einen ersten Halter, der zum formschlüssigen Aufnehmen eines aus dem Robotersteuerpult entnehmbaren, separat tragbaren Roboter-Bedienhandgeräts ausgebildet ist,
- einen vom ersten Halter verschiedenen zweiten Halter, der zum formschlüssigen Aufnehmen eines aus dem Robotersteuerpult entnehmbaren, separat tragbaren Tablet-Computers ausgebildet ist, und
- eine Kommunikationsvorrichtung, die ausgebildet ist, eine Bedienhandgerätesteuerung des Roboter-Bedienhandgeräts und eine Tabletcomputersteuerung des Tablet-Computers mit einer Robotersteuerung steuerungstechnisch zu verbinden.

Ein formschlüssiges Aufnehmen kann insbesondere ein Einsetzen sein, bei dem das Roboter-Bedienhandgerät oder der Tablet-Computer in eine entsprechende Aufnahme, wie beispielsweise eine Tasche, eine Rinne, einen Schlitz oder eine Gabel eingesetzt wird, so dass der Halter das Roboter-Bedienhandgerät oder den Tablet-Computer von außen, insbesondere an gegenüberliegenden Seiten des Roboter-Bedienhandgeräts oder des Tablet-Computers umfängt. Ein formschlüssiges Aufnehmen kann jedoch ggf. auch schon durch ein bloßes Anhängen des Roboter-Bedienhandgeräts oder des Tablet-Computers an den jeweiligen Halter erreicht werden, wie beispielsweise an Anhängen einer Lasche des Roboter-Bedienhandgeräts an einen Haken des Halters. Ein formschlüssiges Aufnehmen kann gegebenenfalls auch durch einen Magneten unterstützt werden, durch den das Roboter-Bedienhandgerät oder der Tablet-Computer neben einer formschlüssiges Aufnahme zusätzlich mittels Magnetkraft gesichert ist.

Die Kommunikationsvorrichtung ist insbesondere dazu eingerichtet, diejenige Bedienhandgerätesteuerung eines Roboter-Bedienhandgeräts und/oder diejenige Tabletcomputersteuerung des Tablet-Computers mit einer Robotersteuerung steuerungstechnisch zu verbinden, welche in das Robotersteuerpult eingesetzt ist.

Die Kommunikationsvorrichtung kann jedoch generell dazu eingerichtet sein, die Zuordnung ein oder mehrerer Roboter-Bedienhandgeräte und/oder ein oder mehrerer Tablet-Computer zu ein oder mehreren Robotersteuerungen zu koordinieren, insbesondere einzurichten, zu schaffen, zu beenden und/oder zu verhindern bzw. nicht zuzulassen.

Grundsätzlich können also sowohl das jeweilige Roboter-Bedienhandgerät, der jeweilige Tablet-Computer, die jeweilige Robotersteuerung und das jeweilige Robotersteuerpult kabelgebunden/kontaktgebunden und/oder drahtlos/funkverbunden miteinander kommunizieren, d.h. Signale, Daten und/oder Informationen austauschen. Die Kommunikationsvorrichtung des Robotersteuerpult kann dabei als zentrale Koordinationsvorrichtung dienen. So kann beispielsweise das Robotersteuerpult ausgebildet sein bzw. die Kommunikationsvorrichtung eingerichtet sein, fest, d.h. eindeutig mit einer einzelnen Robotersteuerung verbunden zu sein und eine Kommunikationsverbindung zwischen dieser Robotersteuerung und einem bestimmten Roboter-Bedienhandgerät und/oder einem bestimmten Tablet-Computer wird dann automatisch eingerichtet und/oder zugelassen, sobald dieses Roboter-Bedienhandgerät oder dieser Tablet-Computer in den jeweiligen Halter des Robotersteuerpults eingesetzt wird.

Wird das mit der zugeordneten Robotersteuerung verbundene Roboter-Bedienhandgerät oder der mit der zugeordneten Robotersteuerung verbundene Tablet-Computer wieder aus dem jeweiligen Halter des Robotersteuerpults entfernt, so kann entweder vorgesehen sein, dass die eingerichtet und/oder zugelassen Kommunikationsverbindung getrennt wird, oder es kann vorgesehen sein, dass die eingerichtet und/oder zugelassen Kommunikationsverbindung weiter bestehen bleibt. Dann kann die zugeordneten Robotersteuerung weiterhin durch dasjenige Roboter-Bedienhandgerät oder denjenigen Tablet-Computer in einem von einer Person handhabenden Zustand des Roboter-Bedienhandgeräts bzw. des Tablet-Computers angesteuert werden, auch wenn das Roboter-Bedienhandgerät bzw. der Tablet-Computer aus dem Robotersteuerpult entnommen ist.

Wird dann beispielsweise genau dieses Roboter-Bedienhandgerät oder genau dieser Tablet-Computer durch die Person zu einem anderen Roboter, zu einer anderen Roboterzelle, d.h. zu einer anderen Robotersteuerung gebracht und soll dieser andere Roboter nun von genau diesem Roboter-Bedienhandgerät oder diesem Tablet-Computer gesteuert werden, so kann vorgesehen sein, dass eine Kommunikationsvorrichtung eines (anderen) Robotersteuerpults eingerichtet ist, dieses Roboter-Bedienhandgerät oder diesen Tablet-Computer mit dem andere Roboter (der mit dem anderen Robotersteuerpult verbunden ist) steuerungstechnisch zu verbinden, sobald das Roboter-Bedienhandgerät oder der Tablet-Computer in das andere Robotersteuerpult des anderen Roboters bzw. der anderen Roboterzelle eingesetzt wird. In diesem Fall wird die bisherige steuerungstechnische Zuordnung des Roboter-Bedienhandgeräts und/oder Tablet-Computer zu dem einen (bisherigen) Roboter bzw. zu der bisherigen Robotersteuerung aufgehoben.

Generell kann vorgesehen sein, dass ein Roboter-Bedienhandgerät und/oder ein Tablet-Computer jedenfalls dann mit einer zugeordneten Robotersteuerung alleine steuerungstechnisch verbunden ist, welche Robotersteuerung mit demjenigen Robotersteuerpult gekoppelt ist bzw. steuerungstechnisch verbunden ist, an welchem Robotersteuerpult das betreffende Roboter-Bedienhandgerät und/oder der betreffende Tablet-Computer in dem jeweiligen Halter eingesetzt ist. In einem solchen Zustand kann der zugeordnete Roboter, d.h. die zugeordnete Robotersteuerung durch das in dem Robotersteuerpult eingesetzte Roboter-Bedienhandgerät und/oder durch den in das manuell Robotersteuerpult eingesetzten Tablet-Computer gesteuert und/oder programmiert werden.

Indem einen vom ersten Halter verschiedenen zweiten Halter, der zum formschlüssigen Aufnehmen eines aus dem Robotersteuerpult entnehmbaren, separat tragbaren Tablet-Computers ausgebildet ist, kann ein Tablet-Computer unabhängig vom Roboter-Bedienhandgerät in das Robotersteuerpult eingesetzt werden und/oder unabhängig vom Roboter-Bedienhandgerät aus dem Robotersteuerpult entnommen werden. Außerdem kann ein Roboter dadurch wahlweise und einzeln über das Roboter-Bedienhandgerät oder einzeln über den Tablet-Computer angesteuert werden. In einem in das Robotersteuerpult eingesetzten Zustand des Tablet-Computers kann der Roboter weiterhin durch den Tablet-Computer oder das entnommene Roboter-Bedienhandgerät gesteuert werden, wobei ein Benutzer zumindest eine Hand oder sogar beide Hände frei hat, da der Tablet-Computer und/oder das Roboter-Bedienhandgerät durch das Robotersteuerpult gehalten wird.

Das Robotersteuerpult kann einen Sensor aufweisen, der ausgebildet ist, ein individuelles in das Robotersteuerpult eingesetztes Roboter-Bedienhandgerät und/oder Tablet-Computer zu identifizieren, und die Kommunikationsvorrichtung ausgebildet ist, die Bedienhandgerätesteuerung des eingesetzten Roboter-Bedienhandgeräts und/oder des Tablet-Computers in Abhängigkeit des vom Sensor identifizierten individuellen Roboter-Bedienhandgeräts und/oder Tablet-Computers mit einer dem individuellen Roboter-Bedienhandgerät und/oder dem individuellen Tablet-Computer zugeordneten Robotersteuerung steuerungstechnisch zu verbinden.

Indem das Robotersteuerpult einen Sensor aufweist, der ausgebildet ist, ein individuelles in das Robotersteuerpult eingesetztes Roboter-Bedienhandgerät zu identifizieren, und die Kommunikationsvorrichtung ausgebildet ist, eine Bedienhandgerätesteuerung des eingesetzten Roboter-Bedienhandgeräts in Abhängigkeit des vom Sensor identifizierten individuellen Roboter-Bedienhandgeräts mit einer dem individuellen Roboter-Bedienhandgerät zugeordneten Robotersteuerung steuerungstechnisch zu verbinden, kann wahlweise, d.h. je nach Bedarf des jeweiligen Roboterbedieners, eine bestimmtes, d.h. individuelles Roboter-Bedienhandgerät von mehreren Roboter-Bedienhandgeräten in eindeutiger und/oder technisch sicherer Weise mit einer bestimmten, d.h. individuellen Robotersteuerung verbunden werden, d.h. zugeordnet werden, so dass auf eindeutige Weise sichergestellt ist, welches individuelle Roboter-Bedienhandgerät mit welchem individuellen Roboter bzw. dessen Robotersteuerung verbunden ist.

Dadurch kann insbesondere zu unterschiedlichen Zeiten wahlweise ein bestimmtes Roboter-Bedienhandgerät und danach ein anderes Roboter-Bedienhandgerät mit der Robotersteuerung desselben Roboters verbunden werden, ohne dass es zu Konflikten kommt. Eine Zuordnung eines bestimmten, individuellen Roboter-Bedienhandgeräts zu einer bestimmten, individuellen Robotersteuerung und damit zu dem Roboter kann automatisch durch das Einsetzen des Roboter-Bedienhandgeräts in das Robotersteuerpult erfolgen. Eine durch ein erstmaliges Einsetzen erfolgte Zuordnung von Roboter-Bedienhandgerät zu der Robotersteuerung kann in einer ersten Fallgestaltung auch dann aufrechterhalten bleiben, wenn das eingesetzte Roboter-Bedienhandgerät wieder aus dem Robotersteuerpult entnommen wird. In einer anderen Fallgestaltung kann die Zuordnung von Roboter-Bedienhandgerät zu der Robotersteuerung automatisch aufgehoben, d.h. beendet werden, sobald das Roboter-Bedienhandgerät wieder aus dem Robotersteuerpult entnommen wird. Wird ein anderes Roboter-Bedienhandgerät in den freien Platz des Robotersteuerpults eingesetzt, kann die dem Robotersteuerpult zugeordnete Robotersteuerung mit diesem neu in das Robotersteuerpult eingesetzte Roboter-Bedienhandgerät automatisch verbunden werden und die bisherige Zuordnung der Robotersteuerung zu dem vorherigen Roboter-Bedienhandgerät aufgehoben, d.h. getrennt werden. Das zum individuellen Roboter-Bedienhandgerät beschriebene gilt, alternativ oder ergänzend, in analoger Weise auch für den jeweiligen individuellen Tablet-Computer.

Die Kommunikationsvorrichtung kann mittels einer Kommunikationsverbindung mit einer Robotersteuerung steuerungstechnisch verbunden sein, die Kommunikationsvorrichtung kann dabei wenigstens einen ersten Sensor aufweisen, der ausgebildet ist, ein an dem Robotersteuerpult aufgenommenes Roboter-Bedienhandgerät zu identifizieren und wenigstens einen zweiten Sensor aufweisen, der ausgebildet ist, einen an dem Robotersteuerpult aufgenommenen Tablet-Computer zu identifizieren, wobei die Kommunikationsvorrichtung außerdem ausgebildet ist, das durch den ersten Sensor identifizierte Roboter-Bedienhandgerät und den durch den zweiten Sensor identifizierten Tablet-Computer bei der Robotersteuerung als ein erstes Handsteuergerät und ein zweites Handsteuergerät zum Ansteuern eines von der Robotersteuerung gesteuerten Roboterarms anzumelden.

Dabei kann jedes Roboter-Bedienhandgerät und jeder Tablet-Computer eine das konkrete Roboter-Bedienhandgerät und den konkrete Tablet-Computer individualisierende Kennzeichnung aufweisen. Eine Kennzeichnung kann beispielsweise eine optische Kennzeichnung, zum Beispiel mittels eines optischen Stichcodes oder eines QR-Codes sein. Alternativ oder ergänzend kann eine Kennzeichnung auch eine digital gespeicherte Information sein, die zum Beispiel mittels berührungsloser Sender-Empfänger-System, wie beispielsweise Nahfeldsensoren (NFC oder RFID-Transponder) oder leitungsgebunden über eine Datenverbindung zwischen dem Roboter-Bedienhandgerät, dem Tablet-Computer und dem Robotersteuerpult übertragen werden kann.

Wenn das Roboter-Bedienhandgerät bei der Robotersteuerung als ein Handsteuergerät zum Ansteuern eines von der Robotersteuerung gesteuerten Roboterarms angemeldet ist, dann ist eine Kommunikation der Bedienhandgerätesteuerung mit der Robotersteuerung möglich, insbesondere in sicherer Technik möglich. Es besteht dann eine eindeutige Verbindung des Roboter-Bedienhandgeräts mit dem zugeordneten Roboter. Wenn der Tablet-Computer bei der Robotersteuerung als ein Handsteuergerät zum Ansteuern eines von der Robotersteuerung gesteuerten Roboterarms angemeldet ist, dann ist eine Kommunikation der Tabletcomputersteuerung mit der Robotersteuerung möglich, insbesondere in sicherer Technik möglich. Es besteht dann eine eindeutige Verbindung des Tablet-Computers mit dem zugeordneten Roboter.

Die Kommunikationsvorrichtung kann ausgebildet sein, wenigstens ein am Roboter-Bedienhandgerät angeordnetes Eingabemittel aus der Gruppe von Eingabemitteln des Roboter-Bedienhandgeräts, umfassend einen Notaus-Taster, einen Betriebsartenwahlschalter, eine Zustimmtaste und eine 3D/6D-Maus, zum Übertragen eines Eingabesignals an die Robotersteuerung aufgrund einer manuellen Eingabe an dem entsprechenden Eingabemittel des Roboter-Bedienhandgeräts freizuschalten, wenn das Roboter-Bedienhandgerät in dem ersten Halter des Robotersteuerpults eingesetzt ist und dabei auch sicherheitsrelevante Eingaben über den Tablet-Computer zur Übertragung an die Robotersteuerung zuzulassen, wenn der Tablet-Computer in dem zweiten Halter des Robotersteuerpults eingesetzt ist. Dies bedeutet, dass zur Freischaltung von sicherheitsrelevanten Funktionen an dem Tablet-Computer, es erforderlich ist, dass sowohl das Roboter-Bedienhandgerät, als auch der Tablet-Computer mit dem Robotersteuerpult steuerungstechnisch verbunden sein müssen. Dies kann in einer speziellen Fallgestaltung insbesondere auch bedeuten, dass der Tablet-Computer an dem Robotersteuerpult mechanisch angesetzt und auch das Roboter-Bedienhandgerät in das Robotersteuerpult mechanisch eingesetzt ist.

Es kann beispielsweise vorgesehen sein, dass zu Beginn manuelle Eingaben an einem entsprechenden Eingabemittel des Roboter-Bedienhandgeräts zunächst nicht möglich sind, d.h. nicht wirksam vorgenommen werden können, die Eingabemittel also noch nicht zum Übertragen eines Eingabesignals an die Robotersteuerung aufgrund einer manuellen Eingabe an dem entsprechenden Eingabemittel des Roboter-Bedienhandgeräts durch die Kommunikationsvorrichtung freigeschaltet sind. Erst wenn das Roboter-Bedienhandgerät erstmals in den ersten Halter des Robotersteuerpults eingesetzt wird, erfolgt eine Freischaltung des Roboter-Bedienhandgeräts, derart, dass das wenigstens eine Eingabemittel zum Übertragen eines Eingabesignals an die Robotersteuerung aufgrund einer manuellen Eingabe an dem entsprechenden Eingabemittel des Roboter-Bedienhandgeräts funktionsfähig ist. Wird anschließend das Roboter-Bedienhandgerät aus dem ersten Halter des Robotersteuerpults entfernt, kann die Freischaltung der Eingabemittel erhalten bleiben, d.h. das wenigstens eine Eingabemittel zum Übertragen eines Eingabesignals an die Robotersteuerung aufgrund einer manuellen Eingabe an dem entsprechenden Eingabemittel des Roboter-Bedienhandgeräts weiterhin funktionsfähig bleiben, obwohl das Roboter-Bedienhandgerät von dem Robotersteuerpult entfernt ist. Dies kann deshalb erlaubt sein, weil das Roboter-Bedienhandgerät die grundlegenden sicherheitsrelevanten Eingabemittel mit sich führt.

Die Kommunikationsvorrichtung kann ausgebildet sein, wenigstens ein am Roboter-Bedienhandgerät angeordnetes Eingabemittel aus der Gruppe von Eingabemitteln des Roboter-Bedienhandgeräts, umfassend einen Notaus-Taster, einen Betriebsartenwahlschalter, eine Zustimmtaste und eine 3D/6D-Maus, zum Übertragen eines Eingabesignals an die Robotersteuerung aufgrund einer manuellen Eingabe an dem entsprechenden Eingabemittel des Roboter-Bedienhandgeräts freizuschalten, wenn das Roboter-Bedienhandgerät in dem ersten Halter des Robotersteuerpults eingesetzt ist und sicherheitsrelevante Eingaben über den Tablet-Computer zur Übertragung an die Robotersteuerung zu unterbinden, wenn der Tablet-Computer aus dem zweiten Halter des Robotersteuerpults herausgenommen ist. Unter einem Freischalten von Eingabemitteln durch die Kommunikationsvorrichtung wird im Rahmen der Erfindung verstanden, dass im Falle von vorhandenen mechanischen Eingabevorrichtungen (Hardware-Eingabemittel) diese Eingabemittel funktionsfähig eingerichtet werden, so dass diese mechanischen Eingabemittel manuell benutzt werden können und entsprechende Funktionen dadurch in der Robotersteuerung ausgelöst werden können. Im Gegensatz dazu sind bei einer fehlenden Freischaltung die mechanischen Eingabevorrichtungen zwar weiterhin physikalisch vorhanden, können jedoch keine Funktion an der Robotersteuerung auslösen, da sie in diesem Falle nicht dazu eingerichtet, d.h. steuerungstechnisch eingebunden sind. Werden die Eingabemittel durch Grafikobjekte auf einem Touch-Screen, sogenannte "Soft-Keys" (Software-Eingabemittel) gebildet, die an einem Touch-Display des Roboter-Bedienhandgeräts oder des Robotersteuerpults angezeigt werden, kann unter einem Freischalten von Eingabemitteln durch die Kommunikationsvorrichtung einerseits verstanden werden, dass durch das Freischalten die Software-Eingabemittel erst auf dem Touch-Screen angezeigt werden, und nur dann für einen Benutzer zu sehen sind, wenn sie auch funktionsfähig sind, d.h. entsprechende Funktionen durch Berühren der Grafikobjekte dieser "Soft-Keys" in der Robotersteuerung ausgelöst werden können und anderenfalls, d.h. wenn die Software-Eingabemittel nicht freigeschaltet sind, die Grafikobjekte der "Soft-Keys" verborgen sind. Andererseits kann unter einem Freischalten von Eingabemitteln durch die Kommunikationsvorrichtung auch verstanden werden, dass, durch das Freischalten die Software-Eingabemittel auf dem Touch-Screen besonders deutlich, scharf, farbig und/oder beleuchtet angezeigt werden und nur dann funktionsfähig sind, d.h. entsprechende Funktionen durch Berühren der Grafikobjekte dieser "Soft-Keys" in der Robotersteuerung ausgelöst werden können und andernfalls, d.h. wenn die Software-Eingabemittel nicht freigeschaltet sind, die Grafikobjekte der "Soft-Keys" undeutlich, unscharf, in Schwarz/Weiß oder Grau, und/oder unbeleuchtet angezeigt werden und dann nicht funktionsfähig sind, d.h. keine entsprechenden Funktionen durch Berühren der Grafikobjekte dieser "Soft-Keys" in der Robotersteuerung ausgelöst werden können.

Es kann beispielsweise vorgesehen sein, dass zu Beginn manuelle Eingaben an einem entsprechenden Eingabemittel des Tablet-Computers zunächst nicht möglich sind, d.h. nicht wirksam vorgenommen werden können, die Eingabemittel also noch nicht zum Übertragen eines Eingabesignals an die Robotersteuerung aufgrund einer manuellen Eingabe an dem entsprechenden Eingabemittel des Tablet-Computers durch die Kommunikationsvorrichtung freigeschaltet sind. Erst wenn der Tablet-Computer erstmals in den zweiten Halter des Robotersteuerpults eingesetzt wird, erfolgt eine Freischaltung des Tablet-Computers, derart, dass das wenigstens eine Eingabemittel zum Übertragen eines Eingabesignals an die Robotersteuerung aufgrund einer manuellen Eingabe an dem entsprechenden Eingabemittel des Tablet-Computers funktionsfähig ist. Wird anschließend der Tablet-Computer aus dem zweiten Halter des Robotersteuerpults entfernt, wird die Freischaltung der Eingabemittel, insbesondere der sicherheitsrelevanten Eingabemittel, beendet, d.h. das wenigstens eine Eingabemittel zum Übertragen eines Eingabesignals an die Robotersteuerung aufgrund einer manuellen Eingabe an dem entsprechenden Eingabemittel des Tablet-Computers bleibt nicht weiterhin funktionsfähig, sondern wird von der Kommunikationsvorrichtung deaktiviert, d.h. die Freischaltung beendet, wenn der Tablet-Computer von dem Robotersteuerpult entfernt ist. Dies kann aus Sicherheitsgründen deshalb nötig sein, weil der Tablet-Computer im Allgemeinen keine grundlegenden sicherheitsrelevanten Eingabemittel, wie beispielsweise einen Notaus-Taster, mit sich führt. Ein bloßes Anzeigen von Informationen auf dem Tablet-Computer kann jedoch weiterhin von der Kommunikationsvorrichtung zugelassen sein.

Die Kommunikationsvorrichtung kann ausgebildet sein, aus der Robotersteuerung übermittelte Informationen auf einem Anzeigemittel des Tablet-Computers anzuzeigen, wenn der Tablet-Computer an der Robotersteuerung angemeldet ist und aus dem zweiten Halter des Robotersteuerpults herausgenommen ist.

Wird der Tablet-Computer aus dem zweiten Halter des Robotersteuerpults herausgenommen, kann vorgesehen sein, dass sicherheitsrelevante Funktionen am Tablet-Computer nicht mehr ausgeführt werden können, d.h. eine entsprechende Freischaltung beendet ist. Sicherheitsrelevante Eingaben umfassen dabei beispielsweise sicherheitsrelevante Eingabemittel, insbesondere einen Notaus-Taster, einen Betriebsartenwahlschalter und/oder eine Zustimmtaste. Die sicherheitsrelevanten Funktionen können jedoch weiterhin über den Tablet-Computer erfolgen, wenn der Tablet-Computer weiterhin an dem zweiten Halter des Robotersteuerpults angesetzt ist und das Robotersteuerpult selbst über die notwendigen sicherheitsrelevanten Eingabemittel, insbesondere einen Notaus-Taster, einen Betriebsartenwahlschalter und/oder eine Zustimmtaste, verfügt. In diesem Fall können die sicherheitsrelevanten Funktionen sogar auch dann weiterhin über den Tablet-Computer erfolgen, wenn das Roboter-Bedienhandgerät aus dem Robotersteuerpult entnommen ist.

Generell kann der Tablet-Computer, nachdem er mit der Robotersteuerung steuerungstechnisch verbunden ist, alle möglichen Arten von Informationen auf einem Display des Tablet-Computers anzeigen. Es können dabei auch Einstellungen, welche die Konfiguration der Robotersteuerung und/oder des Roboters betreffen, mittels des Tablet-Computers bestätigt, geändert, überschrieben und/oder gelöscht werden, wenn es sich um keine für den Betrieb des Roboters sicherheitsrelevante Einstellungen handelt.

Sollen auch Einstellungen, welche die Konfiguration der Robotersteuerung und/oder des Roboters betreffen, mittels des Tablet-Computers bestätigt, geändert, überschrieben und/oder gelöscht werden, die für den Betrieb des Roboters sicherheitsrelevant sind, dann ist es entweder erforderlich, dass der Tablet-Computer über eigene sicherheitsrelevante Eingabemittel, insbesondere einen Notaus-Taster, einen Betriebsartenwahlschalter und/oder eine Zustimmtaste, verfügt, oder es ist erforderlich, dass das Roboter-Bedienhandgerät in das Robotersteuerpult eingesetzt ist, wobei zumindest dann das Roboter-Bedienhandgerät über die sicherheitsrelevanten Eingabemittel, insbesondere einen Notaus-Taster, einen Betriebsartenwahlschalter und/oder eine Zustimmtaste, verfügt. Alternativ kann auch das Robotersteuerpult über die sicherheitsrelevanten Eingabemittel, insbesondere einen Notaus-Taster, einen Betriebsartenwahlschalter und/oder eine Zustimmtaste, verfügen. Dann wäre es unschädlich, wenn das Roboter-Bedienhandgerät aus dem Robotersteuerpult entnommen wäre.

Demgemäß kann die Kommunikationsvorrichtung eingerichtet sein, bei herausgenommenem Tablet-Computer weiterhin Informationen auf einem Anzeigemittel des Tablet-Computers anzuzeigen, wobei jedoch sicherheitsrelevante Eingaben über den Tablet-Computer zur Übertragung an die Robotersteuerung unterbunden sind, d.h. nicht wirksam vorgenommen werden können.

Das Robotersteuerpult kann ein Gehäuse aufweisen, an dem wenigstens ein Eingabemittel aus der Gruppe von Eingabemitteln eingebaut ist, umfassend einen Notaus-Taster, einen Betriebsartenwahlschalter, eine Zustimmtaste und eine 3D/6D-Maus, zum Übertragen eines Eingabesignals an die Robotersteuerung aufgrund einer manuellen Eingabe an dem entsprechenden Eingabemittel des Robotersteuerpults, und die Kommunikationsvorrichtung kann dabei ausgebildet sein, sicherheitsrelevante Eingaben über den Tablet-Computer zur Übertragung an die Robotersteuerung zuzulassen, wenn der Tablet-Computer in dem zweiten Halter des Robotersteuerpults eingesetzt ist und das wenigstens eine Eingabemittel des Robotersteuerpults zum Übertragen eines Eingabesignals an die Robotersteuerung aufgrund einer manuellen Eingabe an dem entsprechenden Eingabemittel des Robotersteuerpults freigeschaltet ist.

In dieser Fallgestaltung kann das Roboter-Bedienhandgerät aus dem Robotersteuerpult entnommen sein. Dies bedeutet, dass auch die grundlegenden sicherheitsrelevanten Eingabemittel, wie beispielsweise der Notaus-Taster, des Roboter-Bedienhandgeräts von dem Robotersteuerpult entfernt sind. Falls also das Robotersteuerpult über keinerlei sicherheitsrelevanter Eingabemittel verfügt, müssten die sicherheitsrelevante Eingaben über den Tablet-Computer zur Übertragung an die Robotersteuerung verhindert werden, selbst wenn der Tablet-Computer in dem Robotersteuerpult verbleibt. Wenn aber das Robotersteuerpult selbst über sicherheitsrelevanter Eingabemittel verfügt, dann kann eine sicherheitsrelevante Eingabe über den Tablet-Computer durch die Kommunikationsvorrichtung zugelassen sein.

Das Robotersteuerpult kann eine drahtlose Kommunikationsschnittstelle aufweisen, die ausgebildet ist zum steuerungstechnischen Verbinden einer Bedienhandgerätesteuerung des Roboter-Bedienhandgeräts mit der Robotersteuerung, wenn das Roboter-Bedienhandgerät aus dem ersten Halter des Robotersteuerpults entnommen ist.

Das Robotersteuerpult kann eine drahtlose Kommunikationsschnittstelle aufweisen, die ausgebildet ist zum steuerungstechnischen Verbinden der Tabletcomputersteuerung des Tablet-Computers mit der Robotersteuerung, wenn der Tablet-Computer aus dem zweiten Halter des Robotersteuerpults entnommen ist.

Wird das mit der zugeordneten Robotersteuerung verbundene Roboter-Bedienhandgerät oder der mit der zugeordneten Robotersteuerung verbundene Tablet-Computer wieder aus dem jeweiligen Halter des Robotersteuerpults entfernt, so kann aufgrund der jeweiligen drahtlosen Kommunikationsschnittstelle vorgesehen sein, dass die eingerichtet und/oder zugelassen Kommunikationsverbindung weiter bestehen bleibt. Dann kann die zugeordneten Robotersteuerung weiterhin durch dasjenige Roboter-Bedienhandgerät oder denjenigen Tablet-Computer in einem von einer Person handhabenden Zustand des Roboter-Bedienhandgeräts bzw. des Tablet-Computers angesteuert werden, auch wenn das Roboter-Bedienhandgerät bzw. der Tablet-Computer aus dem Robotersteuerpult entnommen ist.

Der zweite Halter kann eine Klemmvorrichtung aufweisen, die ausgebildet ist, zwei gegenüberliegende Randabschnitte des Tablet-Computers zu umgreifen, wenn der Tablet-Computer in dem zweiten Halter eingesetzt ist.

Mittels der Klemmvorrichtung kann der Tablet-Computer auf einfache Weise manuell, insbesondere ohne besondere Werkzeuge dazu zu benötigen, mit dem Robotersteuerpult mechanisch verbunden werden und mechanisch auch wieder von dem Robotersteuerpult gelöst werden, insbesondere zerstörungsfrei gelöst werden.

Die Klemmvorrichtung kann insbesondere ausgebildet sein, den Tablet-Computer kraftschlüssig und/oder formschlüssig zu halten.

Die Klemmvorrichtung kann ein an einem Gehäuse des Robotersteuerpults befestigtes erstes Klemmelement aufweisen und ein an dem Robotersteuerpult zwischen einer Verwahrungsstellung und einer Auszugsstellung verstellbar gelagertes zweites Klemmelement aufweisen, wobei das erste Klemmelement und das zweite Klemmelement ausgebildet sind, den Tablet-Computer in der Auszugsstellung des zweiten Klemmelements an zwei gegenüberliegenden Randabschnitten zu umgreifen.

Das verstellbar gelagerte zweite Klemmelement kann mehrere diskrete Auszugsstellungen aufweisen oder stufenlos ausziehbar ausgebildet sein, so dass eine Vielzahl von unterschiedlich großen Tablet-Computern an dem Robotersteuerpult mechanisch angekoppelt werden können.

Das Robotersteuerpult kann eine Federvorrichtung aufweisen, die ausgebildet ist, das zweite Klemmelement in seine Verwahrungsstellung vorgespannt zu lagern.

Indem das zweite Klemmelement mittels einer Federvorrichtung in seine Verwahrungsstellung vorgespannt gelagert ist, bewegt sich das zweite Klemmelement selbsttätig in die Verwahrungsstellung, sobald der Tablet-Computer von dem Robotersteuerpult entfernt wird. Andererseits übt die Federvorrichtung eine Klemmkraft auf den Tablet-Computer aus, wenn der Tablet-Computer in den zweiten Halter des Robotersteuerpults eingesetzt ist, wodurch der Tablet-Computer besonders sicher an dem Robotersteuerpult mechanisch gehalten ist.

Das Robotersteuerpult kann eine am Gehäuse des Robotersteuerpults lösbar befestigt Blendenkappe aufweisen, die ausgebildet ist, in ihrem am Gehäuse befestigten Zustand mit dem Gehäuse des Robotersteuerpults bündig abzuschließen und die Klemmvorrichtung dabei optisch zu verdecken, wenn der Tablet-Computer von dem Robotersteuerpult entfernt ist.

Die Blendenkappe kann dabei nicht nur das an dem Gehäuse des Robotersteuerpults befestigte erste Klemmelement überdecken, sondern auch das in seiner Verwahrungsstellung befindliche zweite Klemmelement überdecken, sobald der Tablet-Computer vom Robotersteuerpult entfernt ist.

Die Erfindung beschreibt, ggf. unabhängig von dem bisher Beschriebenen, mitunter anders als bisher ausgedrückt, somit ein innovatives, intelligentes Robotersteuerpult.

Dieses Robotersteuerpult kann verschiedenste Funktionen aufweisen, um das Roboter-Bedienhandgerät derart koppeln, erkennen und/oder laden zu können, dass dieses Roboter-Bedienhandgerät auch in einem mit dem Robotersteuerpult verbundenen Zustand dem Benutzer weiterhin im vollen oder abgewandelten Funktionsumfang genutzt werden kann.

Erfindungsgemäß ist vorgesehen, dass außer einem Roboter-Bedienhandgerät auch ein separater Tablet-Computer eigenständig an das Robotersteuerpult angekoppelt werden kann. Hierbei sind insbesondere drei wesentliche Ausführungen vorgesehen:
- Einerseits kann der Tablet-Computer über eine mechanische Kopplungsvorrichtung, insbesondere eine mechanische Klemmvorrichtung des Roboter-Bedienhandgeräts mit dem Roboter-Bedienhandgerät mechanisch verbunden sein, welches Roboter-Bedienhandgerät seinerseits mit dem Robotersteuerpult mechanisch verbunden ist. Hierbei kann die Kombinationseinheit von Roboter-Bedienhandgerät und Tablet-Computer gemeinsam an das Robotersteuerpult mechanisch angekoppelt werden und/oder aus dem Robotersteuerpult entfernt, d.h. mechanisch abgekoppelt werden. Das Roboter-Bedienhandgerät kann aber auch alleine mit dem Robotersteuerpult verbunden sein, also ohne dass das Roboter-Bedienhandgerät einen Tablet-Computer trägt.
- Andererseits kann das Robotersteuerpult so ausgebildet sein, dass es zwei unabhängige mechanische Kopplungsvorrichtungen aufweist und zwar eine erste Kopplungsvorrichtung, die ausgebildet ist, das Roboter-Bedienhandgerät unmittelbar an das Robotersteuerpult mechanisch anzukoppeln und eine zweite Kopplungsvorrichtung, die ausgebildet ist, den Tablet-Computer - separat, d.h. getrennt vom Roboter-Bedienhandgerät - als eigenständiges Gerät unmittelbar an das Robotersteuerpult mechanisch anzukoppeln. Aufgrund der zwei unabhängigen mechanischen Kopplungsvorrichtungen können das Roboter-Bedienhandgerät und/oder der Tablet-Computer direkt und unabhängig voneinander mit dem Robotersteuerpult verbunden werden.
- Des Weiteren kann das Robotersteuerpult so ausgebildet sein, dass die beiden soeben genanten Ausführungsformen kombiniert sein können. Hierbei weist das Robotersteuerpult sowohl eine erste mechanische Kopplungsvorrichtung auf, welche einerseits die Möglichkeit eröffnet, das Roboter-Bedienhandgerät zusammen mit einem unmittelbar an das Roboter-Bedienhandgerät mechanisch gekoppelten Tablet-Computer als ein Kombinationsgerät mechanisch an das Robotersteuerpult anzukoppeln, als auch eine zweite mechanische Kopplungsvorrichtung auf, welche andererseits die Möglichkeit eröffnet, das Roboter-Bedienhandgerät ohne Tablet-Computer als ein Einzelgerät mechanisch an das Robotersteuerpult anzukoppeln und den Tablet-Computer separat vom Roboter-Bedienhandgerät als ein Einzelgerät an einer anderen Stelle mechanisch an das Robotersteuerpult anzukoppeln. Beide Einzelgeräte, d.h. das einzelne Roboter-Bedienhandgerät und der einzelne Tablet-Computer sind einzeln mittels separater Halterungen an dem Robotersteuerpult befestigt.

In derjenigen Variante, in der das Robotersteuerpult so ausgebildet ist, dass es zwei unabhängige mechanische Kopplungsvorrichtungen aufweist und zwar eine erste Kopplungsvorrichtung, die ausgebildet ist, das Roboter-Bedienhandgerät unmittelbar an das Robotersteuerpult mechanisch anzukoppeln und eine zweite Kopplungsvorrichtung, die ausgebildet ist, den Tablet-Computer als eigenständiges Gerät unmittelbar an das Robotersteuerpult mechanisch anzukoppeln, bietet eine hohe Flexibilität bei gleichzeitig geringer Komplexität des Gerätes. Als einziger Nachteil ist zu nennen, dass das Roboter-Bedienhandgerät und der Tablet-Computer stets getrennt und einzeln in das Robotersteuerpult eingelegt werden müssen. Dies ist jedoch schnell und komfortabel möglich. Hierzu verfügt das Robotersteuerpult neben einer ersten Aufnahme für das Roboter-Bedienhandgerät auch über eine zweite Aufnahme oder Halter, mit der Möglichkeit den Tablet-Computer separat mechanisch anzukoppeln, sodass dem Nutzer bei eingelegtem Roboter-Bedienhandgerät und eingelegtem Tablet-Computer ein leistungsstarkes Kombinations-Bediengerät zur Verfügung steht, welches im Raum fest positioniert ist. Dieses Kombinations-Gerät kann entsprechend einer Ausführungsform des Tablet-Computers dann ein großes Touch-Display aufweisen und ist somit mit einem funktionsmäßig sehr umfangreichen und leistungsfähigen klassischem Bedienterminal mindestens vergleichbar. Die Vorteile des teilbaren Handbediengeräts unter Einbeziehung eines Tablet-Computers treffen für das wandelbare Bedienterminal ebenfalls zu.

Da der Nutzer seinen insbesondere personifizierten Tablet-Computer mit zum Roboter bzw. zur Roboterzelle nimmt, steht ihm nach dem mechanischen Kopplungsvorgang eine optimal auf ihn zugeschnittene und bereits bekannte Benutzeroberfläche gemäß seiner gewünschten Aufgaben und Rollen zur Verfügung.

Die Leistungsfähigkeit und Eingabemöglichkeiten können mit einem geringen finanziellen Aufwand und minimalem Entwicklungsaufwand gemäß den aktuellen Modellen an Tablet-Computern stets auf dem neuesten Stand der Technik gehalten werden.

Der Tablet-Computer kann neben Bedieninteraktionen auch für viele weitere Interaktionen mit dem Roboter genutzt werden, beispielsweise für die Inbetriebnahme, für die Wartung, für den Service, für die Hilfe und/oder für die Optimierung des Roboters.

Der Tablet-Computer bietet durch seine vorhandenen Sensoren eine Vielzahl an unterstützenden Funktionen, so beispielsweise eine Kamera, Beschleunigungssensoren, Telefonieren, Navigationssensorik (GPS), Kompass, Videotelefonie, Augmented Reality etc., so dass diese Funktionen auch für Roboteranwendungen verfügbar gemacht werden können.

Indem das Robotersteuerpult zwei unabhängige mechanische Kopplungsvorrichtungen aufweist (Roboter-Bedienhandgerät am Robotersteuerpult und Tablet-Computer am Robotersteuerpult) wird es besonders hilfreich, wenn der Nutzer beide Hände frei haben möchte. Beide Hände frei zu haben kann sinnvoll sein, beispielsweise um einen zur Mensch-Roboter-Kollaboration(MRK) eingerichteten Roboter, insbesondere einen Leichtbauroboter, mit den Händen führen zu können, zu telefonieren oder die Hardware der Roboter-Applikation oder des Roboters selbst mit der Hand modifizieren zu können. Eine Befestigung des Tablet-Computers an dem Robotersteuerpult kann dazu beispielsweise durch eine Klemmverbindung erfolgen, die beispielsweise zwei gegenüberliegende Klemmbacken aufweisen kann. Im Gegensatz zu einer mechanischen Klemmung des Tablet-Computers unmittelbar an dem Roboter-Bedienhandgerät, bei dem der Tablet-Computer auf seiner Vorderseite und seiner Rückseite geklemmt wird, kann bei einer Klemmung des Tablet-Computers unmittelbar an dem Robotersteuerpult der Tablet-Computer an zwei gegenüberliegenden Seitenkanten gegriffen, d.h. geklemmt werden. Dazu kann das Robotersteuerpult beispielsweise eine gestellfeste Haltekante mit Nut und einen vertikal beweglichen und angefederten, insbesondere über Konstantkraftfedern wie Rollfedern angefederten Gegenhalter aufweisen. Eine solche Mechanik kann auch von einer horizontal beweglichen und angefederten Blende verdeckt werden, damit sie im Gesamtdesign unaufdringlich integriert ist.

Zusätzliche am Robotersteuerpult vorgesehene Designelemente können auf die jeweilige Funktion und jeweilige Verwendung intuitiv hinweisen. Zum Einlegen kann der Tablet-Computer beispielsweise einfach gegen eine leicht verschiebbare Blende des Robotersteuerpults gedrückt und mit der Unterkante auf einen dann freigegebenen und in der oberen Stellung befindlichen Gegenhalter gesetzt werden. Dieser Gegenhalter wird dann mit dem Tablet-Computer vertikal nach unten geführt, so dass der Tablet-Computer sicher hinter die Haltekante einrasten kann. Dabei kann beispielsweise über einen im Robotersteuerpult integrierten Taster erkannt werden, dass ein Tablet-Computer eingelegt wird. Eine steuerungstechnische Kopplung des Tablet-Computers mit der Robotersteuerung stellt dann beispielsweise die Verknüpfung zur korrekten Steuerung sicher. Dies kann beispielsweise mittels kabellosen Koppelungsverfahren, wie beispielsweise über funkbasierte Schnittstellen, wie der Nahfeldkommunikationstechnologie (NFC) oder mittels Sender-Empfänger-Systemtechnologien zum automatischen und berührungslosen Identifizieren und Lokalisieren von Objekten (RFID) geschehen. Eine steuerungstechnische Kopplung kann aber auch visuell, beispielsweise über einen QR-Code oder taktil, beispielsweise über ein Multi-Touch Display des Tablet-Computers erfolgen. Eine benutzerfreundliche und verwechslungsfreie Zuordnung von Tablet-Computer und Robotersteuerung einerseits und Zuordnung von Roboter-Bedienhandgerät und Robotersteuerung andererseits, kann zusätzlich durch eine Benennung des entsprechenden Roboters auf dem Tablet-Computer erfolgen und/oder durch ein Aufblinken eines Signallichtes am Roboter oder in der Nähe des Roboters unterstützt werden. Das Erkennen des richtigen Roboters kann bzw. muss durch den Nutzer bewusst bestätigt werden, beispielsweise durch eine Eingabe am Tablet-Computer.

Eine Anmeldung des Tablet-Computers an der Robotersteuerung kann beispielsweise auch dadurch erfolgen, dass der Tablet-Computer nur vor die Halterung des Robotersteuerpults oder an die verdeckte Halterung des Robotersteuerpults gehalten wird, jedoch ohne den Tablet-Computer in den Halter des Robotersteuerpults einzulegen. Damit können der Tablet-Computer und die Robotersteuerung auch steuerungstechnisch gekoppelt werden, jedoch beispielsweise nur in einem Anzeigemodus, d.h. dass keine sicherheitsrelevanten Parameter geändert, Befehle gestartet oder manuelle Bewegungen des Roboters ausgeführt werden dürfen. Dies ist insbesondere deshalb erforderlich, weil sichergestellt sein muss, dass sich ein Nothalt-Taster in der Nähe befindet. Befindet sich der Tablet-Computer jedoch mechanisch verbunden in dem Robotersteuerpult und besitzt dieses Robotersteuerpult in einer Ausführungsvariante einen zusätzlichen Nothalt-Taster, so können einige sicherheitsrelevante Funktionen durchaus auf dem Tablet-Computer freigeschalten, d.h. funktionsfähig gemacht werden. Ist zudem das Roboter-Bedienhandgerät im Robotersteuerpult mechanisch gekoppelt, stehen dem Nutzer über die Zustimmtasten und den ortsnahen Nothalt-Taster des Roboter-Bedienhandgeräts sämtliche Funktionen zur Verfügung, die auch möglich sind, wenn der Tablet-Computer mit dem Roboter-Bedienhandgerät direkt gekoppelt ist. In einer solchen Situation sind der Tablet-Computer und das Roboter-Bedienhandgerät quasi über das Robotersteuerpult miteinander verbunden. Der Tablet-Computer kann im gekoppelten Zustand entweder drahtlos, beispielsweise über Induktion oder über ein Kabel geladen werden.

Durch das vorgestellte Robotersteuerpult stehen dem Nutzer somit mittels lediglich einem einzelnen zusätzlichen Gerät vier weitere Bedienmöglichkeiten zur Verfügung.

Erstens kann das Robotersteuerpult an die Robotersteuerung steuerungstechnisch gekoppelt sein und der Benutzer hält das Roboter-Bedienhandgerät alleine in seiner Hand oder der Benutzer hält das Roboter-Bedienhandgerät in seiner Hand, wobei der Tablet-Computer an dem handgehaltenen Roboter-Bedienhandgerät befestigt ist.

Zweitens kann das Robotersteuerpult an die Robotersteuerung steuerungstechnisch gekoppelt sein und das Roboter-Bedienhandgerät in das Robotersteuerpult eingesetzt sein. Der Benutzer hält dann nur den Tablet-Computer alleine in seinen Händen oder hat nichts in seinen Händen, kann aber über das an dem Robotersteuerpult gelagerte Roboter-Bedienhandgerät auf die Robotersteuerung durch manuelle Eingaben am stationären Roboter-Bedienhandgerät zugreifen.

Drittens kann das Robotersteuerpult an die Robotersteuerung steuerungstechnisch gekoppelt sein und der Tablet-Computer an das Robotersteuerpult angesetzt sein. Der Benutzer hält dann lediglich das Roboter-Bedienhandgerät, welches ohne Tablet-Computer ausgestattet ist, in der Hand und der Benutzer kann auf den am Robotersteuerpult gelagerte Tablet-Computer zugreifen, um Steuerungseingaben zu machen. Viertens kann das Robotersteuerpult an die Robotersteuerung steuerungstechnisch gekoppelt sein und sowohl das Roboter-Bedienhandgerät, als auch der Tablet-Computer sind an das Robotersteuerpult angesetzt. Der Benutzer hält dann nichts in der Hand, kann aber auf das stationär im Robotersteuerpult gelagerte Roboter-Bedienhandgerät und auf den stationär am Robotersteuerpult gelagerten Tablet-Computer zugreifen.

Zusammenfassend wird mit der vorliegenden Erfindung ein wandelbares Bedienterminal offenbart, welches auf der Verwendung eines Robotersteuerpults aufbaut und durch Kopplungsmöglichkeiten von Roboter-Bedienhandgerät und Tablet-Computer neue Nutzungsszenarien ermöglicht, die dem Benutzer eine große Bedienfreiheit bietet. So kann sich das so gebildete Bedieninterface vom großen und leistungsfähigen Terminal schnell und einfach durch Herausnehmen der gewünschten Komponenten in ein kleines mobiles Eingabegerät wandeln.

Ein solches wandelbare Robotersteuerpult nach einem oder mehreren der beschriebenen Ausführungsformen rundet die durchgängige Nutzung eines teilbaren Roboter-Bedienhandgeräts unter Einbeziehung eines Tablet-Computers sinnvoll ab und schafft ein großes Feld an neuen Bedienmöglichkeiten für den Roboter.

Verschiedene Ausführungsbeispiele der Erfindung sind exemplarisch in den beigefügten schematischen Zeichnungen dargestellt. Konkrete Merkmale dieser Ausführungsbeispiele können unabhängig davon, in welchem konkreten Zusammenhang sie erwähnt sind, gegebenenfalls auch einzeln oder in anderen als den dargestellten Kombinationen betrachtet, allgemeine Merkmale der Erfindung darstellen.

Es zeigen:
- Fig. 1: eine perspektivische Ansicht eines beispielhaften Robotersteuerpults in Alleinstellung, d.h. bei entnommenem Roboter-Bedienhandgerät,
- Fig. 2: eine perspektivische Ansicht des Robotersteuerpults gemäß Fig. 1 mit einem Roboter-Bedienhandgerät, dargestellt während eines Aufnehmens des Roboter-Bedienhandgeräts in das Robotersteuerpult,
- Fig. 3: eine perspektivische Ansicht des Robotersteuerpults gemäß Fig. 1 mit vollständig aufgenommenem Roboter-Bedienhandgerät,
- Fig. 4: eine perspektivische Ansicht des Robotersteuerpults gemäß Fig. 1 bei abgenommener Blendenkappe und einem zweiten Klemmelement in einer Explosionsdarstellung,
- Fig. 5: eine perspektivische Ansicht des Robotersteuerpults gemäß Fig. 1 mit einem zum Befestigen angesetzten Tablet-Computer,
- Fig. 6: eine perspektivische Ansicht des Robotersteuerpults gemäß Fig. 1 mit dem zum Befestigen angesetzten Tablet-Computer während einer Auszugsbewegung des zweiten Klemmelements,
- Fig. 7: eine perspektivische Ansicht des Robotersteuerpults gemäß Fig. 1 mit dem Tablet-Computer in einem zwischen dem ersten Klemmelement und dem zweiten Klemmelement vollständig eingesetzten Zustand,
- Fig. 8: eine perspektivische Ansicht des Robotersteuerpults gemäß Fig. 1 mit dem Tablet-Computer in einer drahtlosen Verbindung zum Identifizieren und zum Anmelden des Tablet-Computers bei einem Roboter,
- Fig. 9: ein erstes Roboterbedienszenario, bei dem das Robotersteuerpult mit dem eingesetzten Roboter-Bedienhandgerät versehen ist und lediglich der Tablet-Computer entnommen ist,
- Fig. 10: ein zweites Roboterbedienszenario, bei dem das Robotersteuerpult leer ist, d.h. sowohl das Roboter-Bedienhandgerät als auch der Tablet-Computer entnommen sind,
- Fig. 11: ein drittes Roboterbedienszenario, bei dem das Robotersteuerpult mit eingesetztem Tablet-Computer versehen ist und lediglich das Roboter-Bedienhandgerät für eine manuelle Handhabung durch eine Person entnommen sind, und
- Fig. 12: ein viertes Roboterbedienszenario, bei dem sowohl das Roboter-Bedienhandgerät als auch der Tablet-Computer an dem Robotersteuerpult eingesetzt sind.

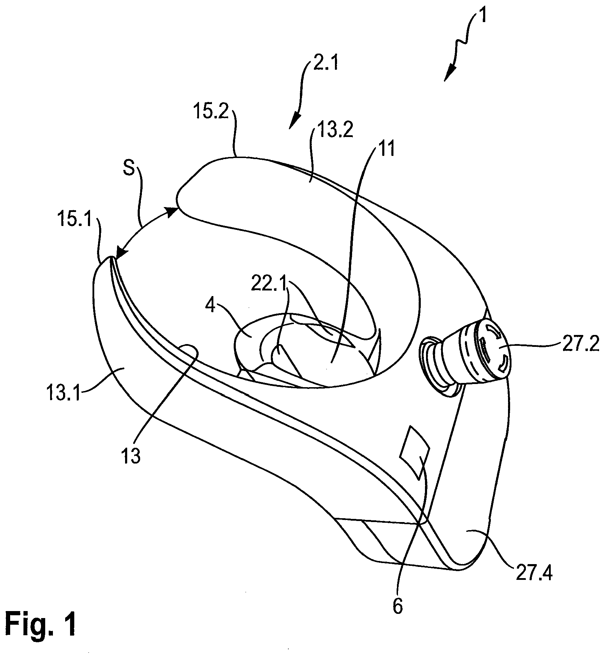

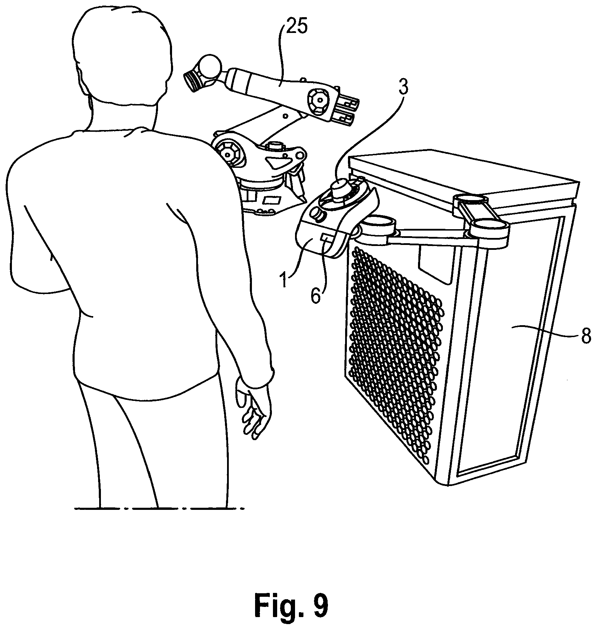

Die Fig. 1 bis Fig. 8 zeigen ein beispielhaftes Robotersteuerpult 1. Das Robotersteuerpult 1 weist einen ersten Halter 2.1 auf, der zum formschlüssigen Aufnehmen eines aus dem Robotersteuerpult 1 entnehmbaren, separat tragbaren Roboter-Bedienhandgeräts 3 ausgebildet ist. Das Robotersteuerpult 1 weist außerdem eine elektrische Ladevorrichtung 4 auf, die ausgebildet ist zum Aufladen eines wiederaufladbaren elektrischen Energiespeichers 5 des Roboter-Bedienhandgeräts 3 in einem an dem Robotersteuerpult 1 aufgenommenen Zustand des Roboter-Bedienhandgeräts 3, und eine Kommunikationsvorrichtung 6, die ausgebildet ist, eine Bedienhandgerätesteuerung 7 des Roboter-Bedienhandgeräts 3 mit einer Robotersteuerung 8 (Fig. 9 bis Fig. 12) steuerungstechnisch zu verbinden.

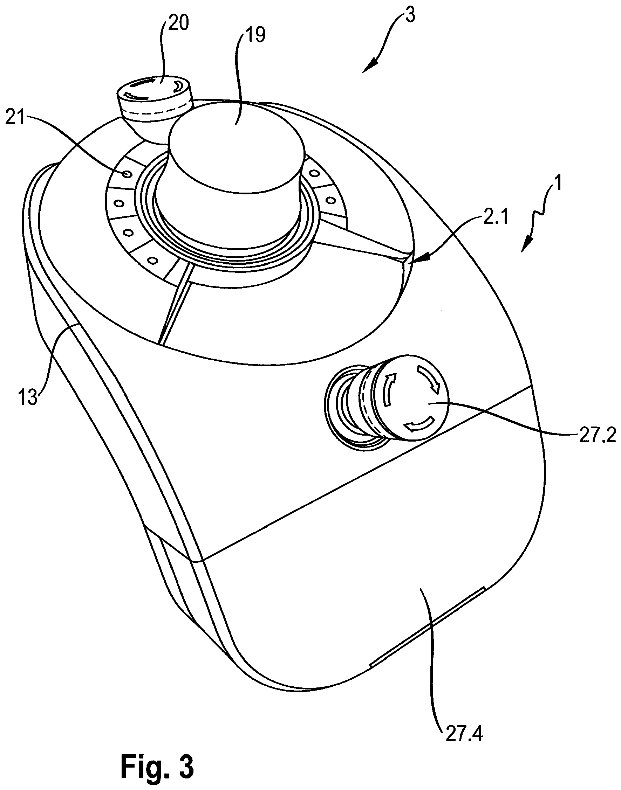

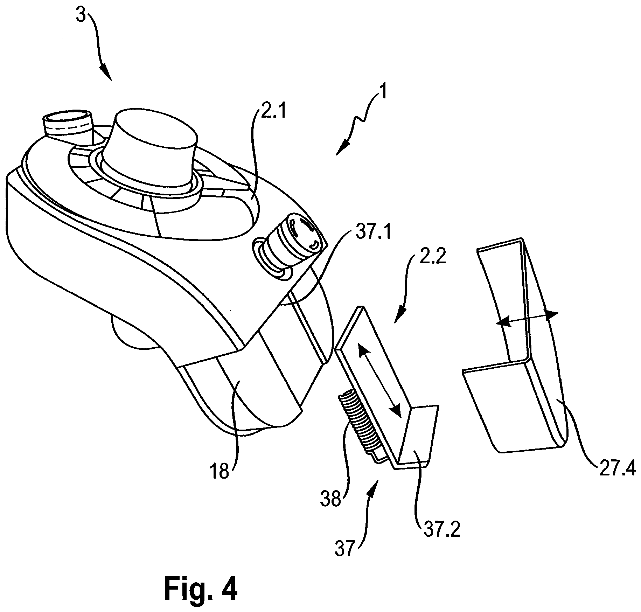

Der ersten Halter 2.1 weist im Falle des vorliegenden Ausführungsbeispiels ein Rastmittel 9 auf, das ausgebildet ist, mit wenigstens einem zum Rastmittel 9 korrespondierenden Gegenrastmittel 10 des Roboter-Bedienhandgeräts 3 in einem an dem Robotersteuerpult 1 aufgenommenen Zustand des Roboter-Bedienhandgeräts 3 zusammenzuwirken, derart, dass das Roboter-Bedienhandgerät 3 in seinem an dem Robotersteuerpult 1 aufgenommenen Zustand eine fest vorgegebene, eindeutige Orientierung relativ zum Robotersteuerpult 1 einnimmt, wie dies insbesondere in Fig. 3 und Fig. 4 gezeigt ist.

Der ersten Halter 2.1 weist im Falle des vorliegenden Ausführungsbeispiels außerdem eine Tasche 11 auf, deren Innenfläche eine zu einem Griffabschnitt 12 des Roboter-Bedienhandgeräts 3 korrespondierende Gestalt aufweist, derart, dass in einem an dem Robotersteuerpult 1 aufgenommenen Zustand des Roboter-Bedienhandgeräts 3 dessen Griffabschnitt 12 formschlüssig in der Tasche 11 des Robotersteuerpults 1 aufgenommen ist.

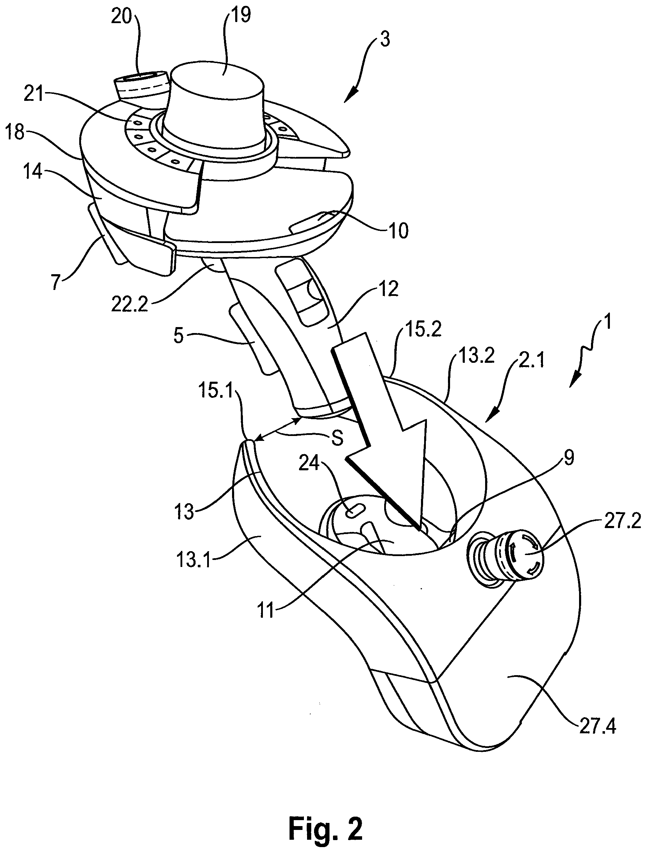

Der ersten Halter 2.1 weist außerdem eine radial offene Ringaufnahme 13 auf, derart, dass die Ringaufnahme 13 einen Gehäuseabschnitt 14 des Roboter-Bedienhandgeräts 3 in einem an dem Robotersteuerpult 1 aufgenommenen Zustand des Roboter-Bedienhandgeräts 3 formschlüssig umgreift, wie dies insbesondere in Fig. 3 bis Fig. 8 dargestellt ist, wobei die Ringaufnahme 13 einen den Gehäuseabschnitt 14 des Roboter-Bedienhandgeräts 3 über einen Teilumfang umgreifenden ersten Schenkelabschnitt 13.1 aufweist und einen dem ersten Schenkelabschnitt 13.1 gegenüberliegenden zweiten Schenkelabschnitt 13.2 aufweist, der den Gehäuseabschnitt 14des Roboter-Bedienhandgeräts 3 über einen anderen Teilumfang umgreift, und ein erstes freies Ende 15.1 des ersten Schenkelabschnitts 13.1 beabstandet zu einem zweiten freien Ende 15.2 des zweiten Schenkelabschnitts 13.2 angeordnet ist, wie beispielsweise in Fig. 1 gezeigt, so dass zwischen den beiden freien Enden 15.1 und 15.2 ein Durchgriffspalt S gebildet wird (Fig.1 und Fig. 2), über den das Roboter-Bedienhandgerät 3 trotz seines an dem Robotersteuerpult 1 aufgenommenen Zustands mit einer Hand hintergriffen werden kann, um eine Rückseite des Gehäuseabschnitts 14 des Roboter-Bedienhandgeräts 3 manuell erfassen zu können.

Das Roboter-Bedienhandgerät 3 weist im Falle des vorliegenden Ausführungsbeispiels ein im wesentlichen kreiszylindrisches Gehäuse 18 auf. An diesem kreiszylindrischen Gehäuse 18 erstreckt sich an dessen Bodenseite der Griffabschnitt 12 vertikal nach unten. An einer Oberseite des kreiszylindrischen Hauptgehäuses 18 kann eine 3D/6D-Maus 19, ein Notaus-Taster 20 und/oder ein Betriebsartenwahlschalter 21 angeordnet sein. Die offene Ringaufnahme 13 des ersten Halters 2.1 des Robotersteuerpults 1 kann ausgebildet sein, das kreiszylindrische Gehäuse 18 des Roboter-Bedienhandgeräts 3 zu umfassen, wenn das Roboter-Bedienhandgerät 3 in das Robotersteuerpult 1 eingesetzt ist.

Der erste Schenkelabschnitt 13.1 der Ringaufnahme 13 fasst das kreiszylindrische Gehäuse 18 des Roboter-Bedienhandgeräts 3 rechtsseitig ein und der zweite Schenkelabschnitt 13.2 der Ringaufnahme 13 fasst das kreiszylindrische Gehäuse 18 des Roboter-Bedienhandgeräts 3 linksseitig ein, wobei das erste freie Ende 15.1 des ersten Schenkelabschnitts 13.1 in einem Abstand S vom zweiten freien Ende 15.2 des zweiten Schenkelabschnitts 13.2 angeordnet ist. Zwischen dem ersten freien Ende 15.1 des ersten Schenkelabschnitts 13.1 und dem zweiten freien Ende 15.2 des zweiten Schenkelabschnitts 13.2 wird demgemäß eine radiale Öffnung der Ringaufnahme 13 gebildet. Die radiale Öffnung der Ringaufnahme 13 erlaubt es einem Benutzer mit seiner Hand das kreiszylindrische Gehäuse 18 des Roboter-Bedienhandgeräts 3 bis zu einer Rückseite 17 zu umfassen, ohne dass der erste Halter 2.1 bzw. die Ringaufnahme 13 ein Erfassen des Roboter-Bedienhandgeräts 3 in diesem Bereich verhindern würde. Dadurch kann beispielsweise auf einen an der Rückseite des kreiszylindrischen Hauptgehäuses 18 des Roboter-Bedienhandgeräts 3 angeordneten Zustimmtaster manuell mit der Hand zugegriffen werden, selbst wenn das Roboter-Bedienhandgerät 3 in dem Robotersteuerpult 1 eingesetzt ist. Unabhängig davon ist eine Entnahme des Roboter-Bedienhandgeräts 3 aus dem Robotersteuerpult 1 mit der Hand dadurch generell erleichtert.

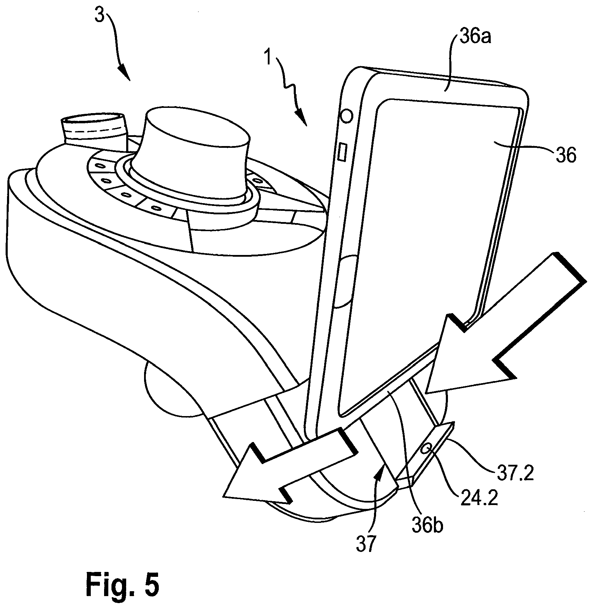

Erfindungsgemäß weist das Robotersteuerpult 1 einen ersten Halter 2.1 auf, der zum formschlüssigen Aufnehmen eines aus dem Robotersteuerpult 1 entnehmbaren, separat tragbaren Roboter-Bedienhandgeräts 3 ausgebildet ist. Außerdem weist das Robotersteuerpult 1 einen vom ersten Halter 2.1 verschiedenen zweiten Halter 2.2 auf, der zum formschlüssigen Aufnehmen eines aus dem Robotersteuerpult 1 entnehmbaren, separat tragbaren Tablet-Computers 36 (Fig. 5) ausgebildet ist. Darüber hinaus weist das Robotersteuerpult 1 die Kommunikationsvorrichtung 6 auf, die ausgebildet ist, eine Bedienhandgerätesteuerung 7 des Roboter-Bedienhandgeräts 3 und eine Tabletcomputersteuerung 36.1 des Tablet-Computers 36 mit der Robotersteuerung 8 steuerungstechnisch zu verbinden.

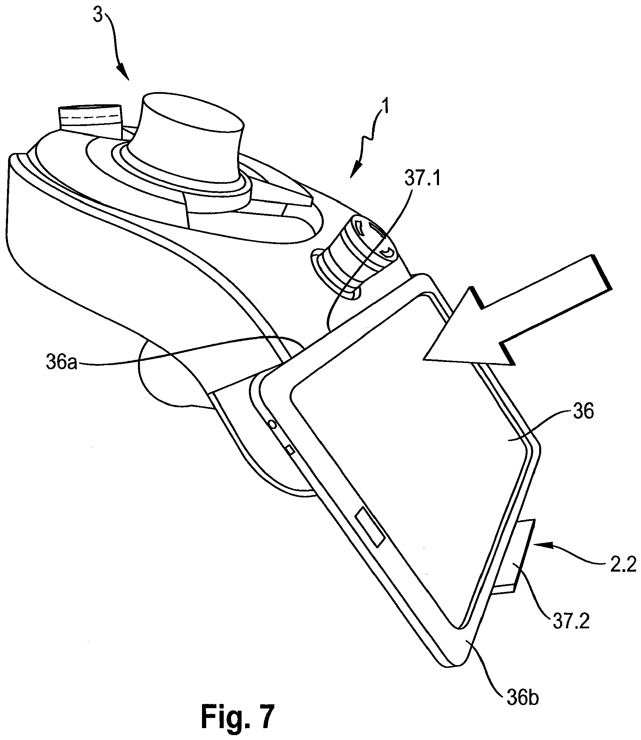

Der zweite Halter 2.2 weist im Falle des vorliegenden Ausführungsbeispiels, wie insbesondere in Fig. 4 bis Fig. 7 gezeigt ist, eine Klemmvorrichtung 37 auf, die ausgebildet ist, zwei gegenüberliegende Randabschnitte 36a und 36b des Tablet-Computers 36 zu umgreifen, wenn der Tablet-Computer 36 in dem zweiten Halter 2.2.eingesetzt ist, wie dies in Fig. 7 gezeigt ist.

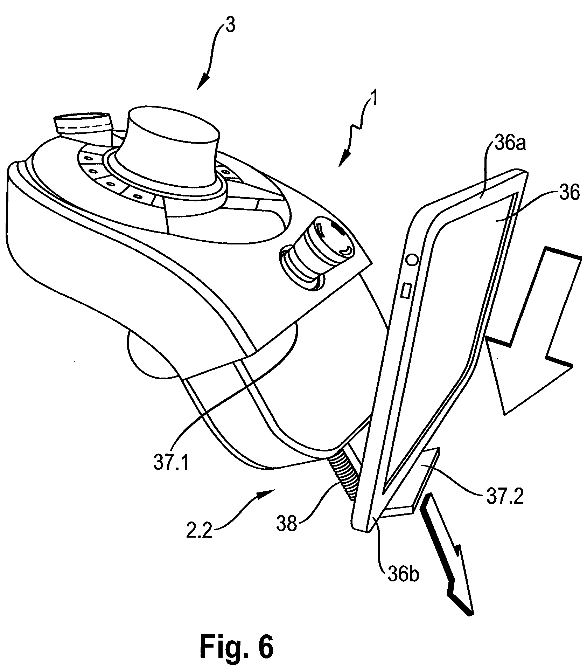

Die Klemmvorrichtung 37 weist ein an dem Gehäuse 18 des Robotersteuerpults 1 befestigtes erstes Klemmelement 37.1 auf und ein an dem Robotersteuerpult 1 zwischen einer Verwahrungsstellung (Fig. 5) und einer Auszugsstellung (Fig. 6, Fig. 7) verstellbar gelagertes zweites Klemmelement 37.2 auf, wobei das erste Klemmelement 37.1 und das zweite Klemmelement 37.2 ausgebildet sind, den Tablet-Computer 36 in der Auszugsstellung des zweiten Klemmelements 37.2 an zwei gegenüberliegenden Randabschnitten 36a und 36b zu umgreifen, wie dies in Fig. 7 dargestellt ist.

Mittels einer Federvorrichtung 38 kann das zweite Klemmelement 37.2 in seine Verwahrungsstellung gemäß Fig. 5 vorgespannt gelagert sein. Wird nun der Tablet-Computer 36, wie in Fig. 6 aufgezeigt, mit seinem unteren Randabschnitt 36b an das verwahrte zweite Klemmelement 37.2 angesetzt, kann das zweite Klemmelement 37.2 entgegen der Federkraft der Federvorrichtung 38 nach unten herausgezogen werden, bis der obere Randabschnitt 36a des Tablet-Computers 36 unter das feststehende erste Klemmelement 37.1 gesteckt werden kann, wie dies in Fig. 7 aufgezeigt ist. Wird der Tablet-Computers 36 nun losgelassen, so hält aufgrund der Federvorspannung das zweite Klemmelement 37.2 den Tablet-Computer 36 an dem Robotersteuerpult 1.

Das Robotersteuerpult 1 kann außerdem eine am Gehäuse des Robotersteuerpults 1 lösbar befestigt Blendenkappe 27.4 aufweisen (Fig. 4), die ausgebildet ist, in ihrem am Gehäuse 18 befestigten Zustand mit dem Gehäuse 18 des Robotersteuerpults 1 bündig abzuschließen und die Klemmvorrichtung 37 dabei optisch zu verdecken, wenn der Tablet-Computer 36 von dem Robotersteuerpult 1 entfernt ist, wie dies in Fig. 1 bis Fig. 3 dargestellt ist.

Das Robotersteuerpult weist im Falle des vorliegenden Ausführungsbeispiels eine drahtlose Kommunikationsschnittstelle 39 auf, die ausgebildet ist zum steuerungstechnischen Verbinden der Bedienhandgerätesteuerung 7 des Roboter-Bedienhandgeräts 3 mit der Robotersteuerung 8 (Fig. 9 bis Fig. 12), wenn das Roboter-Bedienhandgerät 3 aus dem ersten Halter 2.1 des Robotersteuerpults 1 entnommen ist.

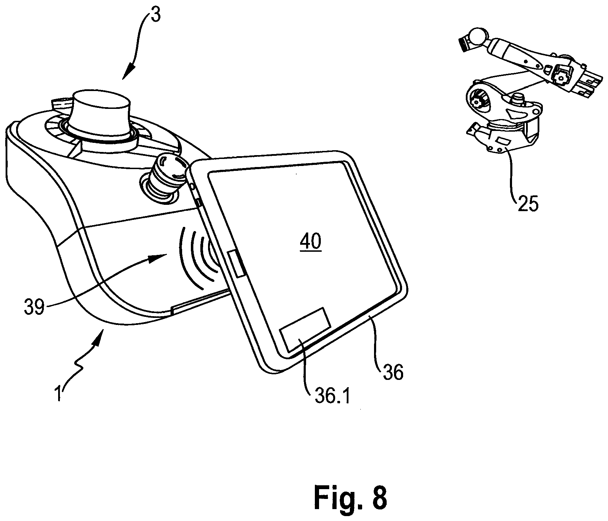

Das Robotersteuerpult weist im Falle des vorliegenden Ausführungsbeispiels außerdem eine drahtlose Kommunikationsschnittstelle 39 auf, die ausgebildet ist zum steuerungstechnischen Verbinden der Tabletcomputersteuerung 36.1 des Tablet-Computers 36 mit der Robotersteuerung 8 (Fig. 9 bis Fig. 12), wenn der Tablet-Computer 36, wie in Fig. 8 aufgezeigt, aus dem zweiten Halter 2.2 des Robotersteuerpults 1 entnommen ist.

Die Kommunikationsvorrichtung 6 kann mittels einer Kommunikationsverbindung 23 (insb. Fig. 9) mit einer Robotersteuerung 8 steuerungstechnisch verbunden sein, wobei die Kommunikationsvorrichtung 6, wie in Fig. 2 aufgezeigt, wenigstens einen ersten Sensor 24.1 aufweist, der ausgebildet ist, ein an dem Robotersteuerpult 1 aufgenommenes Roboter-Bedienhandgerät 3 zu identifizieren und wenigstens einen zweiten Sensor 24.2 aufweist, wie in Fig. 5 aufgezeigt, der ausgebildet ist, den an dem Robotersteuerpult 1 aufgenommenen Tablet-Computer 36 zu identifizieren, wobei die Kommunikationsvorrichtung 6 außerdem ausgebildet ist, das durch den ersten Sensor 24.1 identifizierte Roboter-Bedienhandgerät 3 und den durch den zweiten Sensor 24.2 identifizierten Tablet-Computer 36 bei der Robotersteuerung 8 als ein erstes Handsteuergerät und ein zweites Handsteuergerät zum Ansteuern eines von der Robotersteuerung 8 gesteuerten Roboterarms 25 anzumelden.

Die Fig. 9 zeigt ein erstes Roboterbedienszenario, bei dem das Robotersteuerpult 1 mit dem eingesetzten Roboter-Bedienhandgerät 3 versehen ist und lediglich der Tablet-Computer 36 entnommen ist. Die Kommunikationsvorrichtung 6 ist dabei ausgebildet, wenigstens ein am Roboter-Bedienhandgerät 3 angeordnetes Eingabemittel aus der Gruppe von Eingabemitteln des Roboter-Bedienhandgeräts 3, umfassend beispielsweise die Notaus-Taster 20, den Betriebsartenwahlschalter 21 und die 3D/6D-Maus 19, zum Übertragen eines Eingabesignals an die Robotersteuerung 8 aufgrund einer manuellen Eingabe an dem entsprechenden Eingabemittel des Roboter-Bedienhandgeräts 3 freizuschalten, wenn das Roboter-Bedienhandgerät 3 in dem ersten Halter 2.1 des Robotersteuerpults 1 eingesetzt ist.

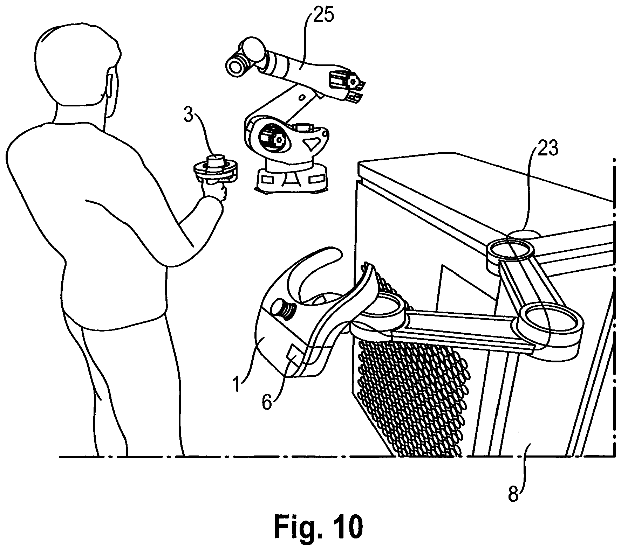

Es kann in diesem Roboterbedienszenario beispielsweise vorgesehen sein, dass zu Beginn manuelle Eingaben an einem entsprechenden Eingabemittel des Roboter-Bedienhandgeräts 3 zunächst nicht möglich sind, d.h. nicht wirksam vorgenommen werden können, die Eingabemittel also noch nicht zum Übertragen eines Eingabesignals an die Robotersteuerung 8 aufgrund einer manuellen Eingabe an dem entsprechenden Eingabemittel des Roboter-Bedienhandgeräts 3 durch die Kommunikationsvorrichtung 6 freigeschaltet sind. Erst wenn das Roboter-Bedienhandgerät 3 erstmals in den ersten Halter 2.1 des Robotersteuerpults 1 eingesetzt wird, wie in Fig. 9 dargestellt, erfolgt eine Freischaltung des Roboter-Bedienhandgeräts 3, derart, dass das wenigstens eine Eingabemittel zum Übertragen eines Eingabesignals an die Robotersteuerung 8 aufgrund einer manuellen Eingabe an dem entsprechenden Eingabemittel des Roboter-Bedienhandgeräts 3 funktionsfähig ist. Wird anschließend das Roboter-Bedienhandgerät 3 aus dem ersten Halter 2.1 des Robotersteuerpults 1 entfernt, wie in Fig. 10 dargestellt, so kann die Freischaltung der Eingabemittel erhalten bleiben, d.h. das wenigstens eine Eingabemittel zum Übertragen eines Eingabesignals an die Robotersteuerung 8 aufgrund einer manuellen Eingabe an dem entsprechenden Eingabemittel des Roboter-Bedienhandgeräts 3 weiterhin funktionsfähig bleiben, obwohl das Roboter-Bedienhandgerät 3 von dem Robotersteuerpult 1 entfernt ist. Dies kann deshalb erlaubt sein, weil das Roboter-Bedienhandgerät 3 die grundlegenden sicherheitsrelevanten Eingabemittel, beispielsweise die Notaus-Taster 20, den Betriebsartenwahlschalter 21 und die 3D/6D-Maus 19, mit sich führt.

Im zweiten Roboterbedienszenario gemäß Fig. 10 ist das Robotersteuerpult 1 leer, d.h. sowohl das Roboter-Bedienhandgerät 3 als auch der Tablet-Computer 36 sind entnommen.

Ist der Tablet-Computer 36 aus dem zweiten Halter 2.2 des Robotersteuerpults 1 herausgenommen, erlaubt die Kommunikationsvorrichtung 6 lediglich, dass aus der Robotersteuerung 8 übermittelte Informationen auf einem Anzeigemittel 40 des Tablet-Computers 36 angezeigt werden. Sicherheitsrelevante Eingaben über den Tablet-Computer 36 zur Übertragung an die Robotersteuerung 8 sind dann unterbunden, wenn der Tablet-Computer 36 aus dem zweiten Halter 2.2 des Robotersteuerpults 1 herausgenommen wird.

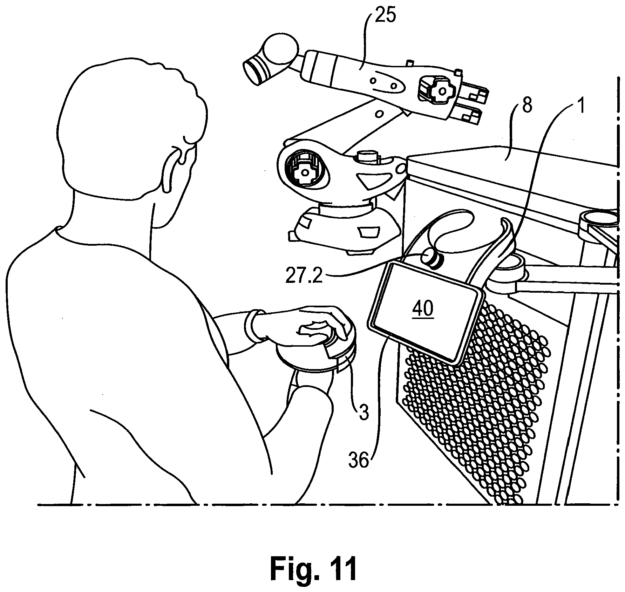

Im dritten Roboterbedienszenario gemäß Fig. 11, ist das Robotersteuerpult 1 mit eingesetztem Tablet-Computer 36 versehen ist und lediglich das Roboter-Bedienhandgerät 3 für eine manuelle Handhabung durch eine Person entnommen.

Das Robotersteuerpult 1 weist im vorliegenden Fall ein Gehäuse auf, an dem zumindest ein weiterer Notaus-Taster 27.2, zum Übertragen eines Eingabesignals an die Robotersteuerung 8 aufgrund einer manuellen Eingabe an dem entsprechenden Notaus-Taster 27.2 des Robotersteuerpults 1 angeordnet ist, so dass die Kommunikationsvorrichtung 6 in diesem Fall es zulässt, sicherheitsrelevante Eingaben über den Tablet-Computer 36 zur Übertragung an die Robotersteuerung 8 zuzulassen, da der Tablet-Computer 36 auch in dem zweiten Halter 2.2 des Robotersteuerpults 1 eingesetzt ist. Das wenigstens eine Eingabemittel des Robotersteuerpults 1, d.h. in diesem Fall der weitere Notaus-Taster 27.2 ist zum Übertragen eines Eingabesignals an die Robotersteuerung 8 aufgrund einer manuellen Eingabe an dem entsprechenden Notaus-Taster 27.2 des Robotersteuerpults 1 freigeschaltet.

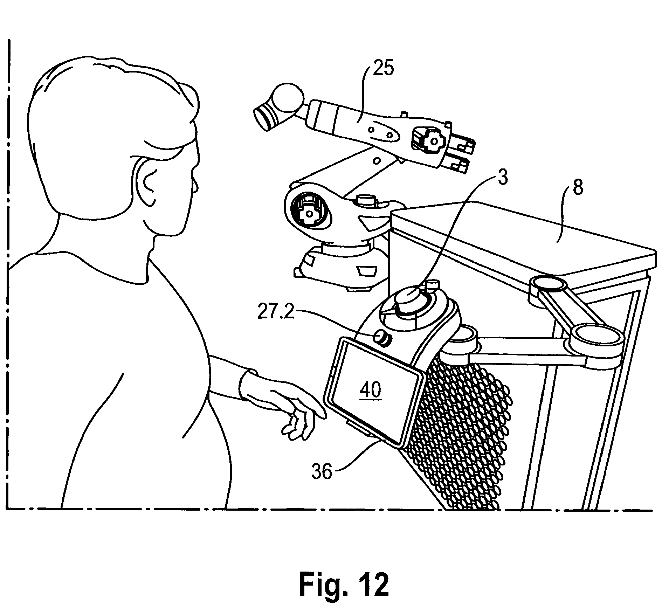

Im vierten Roboterbedienszenario gemäß Fig. 12 ist sowohl das Roboter-Bedienhandgerät 3, als auch der Tablet-Computer 36 an dem Robotersteuerpult 1 eingesetzt. Die Kommunikationsvorrichtung 6 kann dabei zulassen, dass das durch den ersten Sensor 24.1 identifizierte Roboter-Bedienhandgerät 3 und der durch den zweiten Sensor 24.2 identifizierte Tablet-Computer 36 bei der Robotersteuerung 8 als ein erstes Handsteuergerät und ein zweites Handsteuergerät zum Ansteuern des Roboterarms 25 über die Robotersteuerung 8 angemeldet werden.

## Patentansprüche

1. Robotersteuerpult, aufweisend:
- einen ersten Halter (2.1), der zum formschlüssigen Aufnehmen eines aus dem Robotersteuerpult (1) entnehmbaren, separat tragbaren Roboter-Bedienhandgeräts (3) ausgebildet ist,
- einen vom ersten Halter (2.1) verschiedenen zweiten Halter (2.2), der zum formschlüssigen Aufnehmen eines aus dem Robotersteuerpult (1) entnehmbaren, separat tragbaren Tablet-Computers (36) ausgebildet ist, und
- eine Kommunikationsvorrichtung (6), die ausgebildet ist, eine Bedienhandgerätesteuerung (7) des Roboter-Bedienhandgeräts (3) und eine Tabletcomputersteuerung (36.1) des Tablet-Computers (36) mit einer Robotersteuerung (8) steuerungstechnisch zu verbinden,
**gekennzeichnet durch**:
- einen Sensor (24), der ausgebildet ist, ein individuelles in das Robotersteuerpult (1) eingesetztes Roboter-Bedienhandgerät (3) und/oder Tablet-Computer (36) zu identifizieren, und die Kommunikationsvorrichtung (6) ausgebildet ist, die Bedienhandgerätesteuerung (7) des eingesetzten Roboter-Bedienhandgeräts (3) und/oder des Tablet-Computers (36) in Abhängigkeit des vom Sensor (24) identifizierten individuellen Roboter-Bedienhandgeräts (3) und/oder Tablet-Computers (36) mit einer dem individuellen Roboter-Bedienhandgerät (3) und/oder dem individuellen Tablet-Computer (36) zugeordneten Robotersteuerung (8) steuerungstechnisch zu verbinden.

2. Robotersteuerpult nach Anspruch 1, **dadurch gekennzeichnet, dass** die Kommunikationsvorrichtung (6) mittels einer Kommunikationsverbindung (23) mit einer Robotersteuerung (8) steuerungstechnisch verbunden ist, die Kommunikationsvorrichtung (6) wenigstens einen ersten Sensor (24.1) aufweist, der ausgebildet ist, ein an dem Robotersteuerpult (1) aufgenommenes Roboter-Bedienhandgerät (3) zu identifizieren und wenigstens einen zweiten Sensor (24.2) aufweist, der ausgebildet ist, einen an dem Robotersteuerpult (1) aufgenommenen Tablet-Computer (36) zu identifizieren, wobei die Kommunikationsvorrichtung (6) außerdem ausgebildet ist, das durch den ersten Sensor (24.1) identifizierte Roboter-Bedienhandgerät (3) und den durch den zweiten Sensor (24.2) identifizierten Tablet-Computer (36) bei der Robotersteuerung (8) als ein erstes Handsteuergerät und ein zweites Handsteuergerät zum Ansteuern eines von der Robotersteuerung (8) gesteuerten Roboterarms (25) anzumelden.

3. Robotersteuerpult nach Anspruch 2, **dadurch gekennzeichnet, dass** die Kommunikationsvorrichtung (6) ausgebildet ist, wenigstens ein am Roboter-Bedienhandgerät (3) angeordnetes Eingabemittel aus der Gruppe von Eingabemitteln des Roboter-Bedienhandgeräts (3), umfassend einen Notaus-Taster (20), einen Betriebsartenwahlschalter (21), eine Zustimmtaste und eine 3D/6D-Maus (19), zum Übertragen eines Eingabesignals an die Robotersteuerung (8) aufgrund einer manuellen Eingabe an dem entsprechenden Eingabemittel des Roboter-Bedienhandgeräts (3) freizuschalten, wenn das Roboter-Bedienhandgerät (3) in dem ersten Halter (2.1) des Robotersteuerpults (1) eingesetzt ist und dabei auch sicherheitsrelevante Eingaben über den Tablet-Computer (36) zur Übertragung an die Robotersteuerung (8) zuzulassen, wenn der Tablet-Computer (36) in dem zweiten Halter (2.2) des Robotersteuerpults (1) eingesetzt ist.

4. Robotersteuerpult nach Anspruch 2 oder 3, **dadurch gekennzeichnet, dass** die Kommunikationsvorrichtung (6) ausgebildet ist, wenigstens ein am Roboter-Bedienhandgerät (3) angeordnetes Eingabemittel aus der Gruppe von Eingabemitteln des Roboter-Bedienhandgeräts (3), umfassend einen Notaus-Taster (20), einen Betriebsartenwahlschalter (21), eine Zustimmtaste und eine 3D/6D-Maus (19) zum Übertragen eines Eingabesignals an die Robotersteuerung (8) aufgrund einer manuellen Eingabe an dem entsprechenden Eingabemittel des Roboter-Bedienhandgeräts (3) freizuschalten, wenn das Roboter-Bedienhandgerät (3) in dem ersten Halter (2.1) des Robotersteuerpults (1) eingesetzt ist und sicherheitsrelevante Eingaben über den Tablet-Computer (36) zur Übertragung an die Robotersteuerung (8) zu unterbinden, wenn der Tablet-Computer (36) aus dem zweiten Halter (2.2) des Robotersteuerpults (1) herausgenommen ist.

5. Robotersteuerpult nach einem der Ansprüche 2 bis 4, **dadurch gekennzeichnet, dass** die Kommunikationsvorrichtung (6) ausgebildet ist, aus der Robotersteuerung (8) übermittelte Informationen auf einem Anzeigemittel (40) des Tablet-Computers (36) anzuzeigen, wenn der Tablet-Computer (36) an der Robotersteuerung (8) angemeldet ist und aus dem zweiten Halter (2.2) des Robotersteuerpults (1) herausgenommen ist.

6. Robotersteuerpult nach einem der Ansprüche 2 bis 5, **dadurch gekennzeichnet, dass** das Robotersteuerpult (1) ein Gehäuse aufweist, an dem wenigstens ein Eingabemittel aus der Gruppe von Eingabemitteln eingebaut ist, umfassend einen Notaus-Taster (20), einen Betriebsartenwahlschalter (21), eine Zustimmtaste und eine 3D/6D-Maus (19), zum Übertragen eines Eingabesignals an die Robotersteuerung (8) aufgrund einer manuellen Eingabe an dem entsprechenden Eingabemittel des Robotersteuerpults (1), und die Kommunikationsvorrichtung (6) ausgebildet ist, sicherheitsrelevante Eingaben über den Tablet-Computer (36) zur Übertragung an die Robotersteuerung (8) zuzulassen, wenn der Tablet-Computer (36) in dem zweiten Halter (2.2) des Robotersteuerpults (1) eingesetzt ist und das wenigstens eine Eingabemittel des Robotersteuerpults (1) zum Übertragen eines Eingabesignals an die Robotersteuerung (8) aufgrund einer manuellen Eingabe an dem entsprechenden Eingabemittel des Robotersteuerpults (1) freigeschaltet ist.

7. Robotersteuerpult nach einem der Ansprüche 2 bis 6, aufweisend eine drahtlose Kommunikationsschnittstelle (39), die ausgebildet ist zum steuerungstechnischen Verbinden einer Bedienhandgerätesteuerung (7) des Roboter-Bedienhandgeräts (3) mit der Robotersteuerung (8), wenn das Roboter-Bedienhandgerät (3) aus dem ersten Halter (2.1) des Robotersteuerpults (1) entnommen ist.

8. Robotersteuerpult nach einem der Ansprüche 2 bis 7, aufweisend eine drahtlose Kommunikationsschnittstelle (39), die ausgebildet ist zum steuerungstechnischen Verbinden der Tabletcomputersteuerung (36.1) des Tablet-Computers (36) mit der Robotersteuerung (8), wenn der Tablet-Computer (36) aus dem zweiten Halter (2.2) des Robotersteuerpults (1) entnommen ist.

9. Robotersteuerpult nach einem der Ansprüche 1 bis 8, **dadurch gekennzeichnet, dass** der zweite Halter (2.2) eine Klemmvorrichtung (37) aufweist, die ausgebildet ist, zwei gegenüberliegende Randabschnitte (36a, 36b) des Tablet-Computers (36) zu umgreifen, wenn der Tablet-Computer (36) in dem zweiten Halter (2.2) eingesetzt ist.

10. Robotersteuerpult nach Anspruch 9, **dadurch gekennzeichnet, dass** die Klemmvorrichtung (37) ein an einem Gehäuse (18) des Robotersteuerpults (1) befestigtes erstes Klemmelement (37.1) aufweist und ein an dem Robotersteuerpult (1) zwischen einer Verwahrungsstellung und einer Auszugsstellung verstellbar gelagertes zweites Klemmelement (37.2) aufweist, wobei das erste Klemmelement (37.1) und das zweite Klemmelement (37.2) ausgebildet sind, den Tablet-Computer (36) in der Auszugsstellung des zweiten Klemmelements (37.2) an zwei gegenüberliegenden Randabschnitten (36a, 36b) zu umgreifen.

11. Robotersteuerpult nach Anspruch 10, aufweisend eine Federvorrichtung (38), die ausgebildet ist, das zweite Klemmelement (37.2) in seine Verwahrungsstellung vorgespannt zu lagern.

12. Robotersteuerpult nach einem der Ansprüche 9 bis 11, aufweisend eine am Gehäuse (18) des Robotersteuerpults (1) lösbar befestigt Blendenkappe (27.4), die ausgebildet ist, in ihrem am Gehäuse (18) befestigten Zustand mit dem Gehäuse (18) des Robotersteuerpults (1) bündig abzuschließen und die Klemmvorrichtung (37) dabei optisch zu verdecken, wenn der Tablet-Computer (36) von dem Robotersteuerpult (1) entfernt ist.

## Claims

1. Robot control panel, comprising:
- a first holder (2.1) which is designed to hold, in a form-fitting manner, a separately portable handheld robot control device (3), which can be removed from the robot control panel (1),
- a second holder (2.2) which differs from the first holder (2.1) and which is designed to hold, in a form-fitting manner, a separately portable tablet computer (36) which can be removed from the robot control panel (1), and
- a communication device (6) which is designed to connect a handheld control unit (7) of the handheld robot control device (3) and a tablet computer control (36.1) of the tablet computer (36) with a robot controller (8) in terms of control technology,
**characterized in that:**
- a sensor (24) which is designed to identify an individual robot control device (3) and / or tablet computer (36) inserted into the robot control panel (1), and the communication device (6) is designed, the handheld control unit (7) of the handheld robot control device (3) and / or the tablet computer (36) used depending on the individual handheld robot control unit (3) and / or tablet computer (3) identified by the sensor (24) 36) to be connected in terms of control technology to a robot controller (8) assigned to the individual robot control device (3) and / or the individual tablet computer (36).

2. Robot control panel according to claim 1, **characterized in that** the communication device (6) is control-technically connected by means of a communication connection (23) to a robot controller (8), the communication device (6) comprises at least one first sensor (24.1) which is designed to identify a handheld robot operating device (3) received on the robot control desk (1) and at least one second sensor (24.2) which is designed to identify a tablet computer (36), which is received on the robot control desk (1), the communication device (6) also being designed to register the handheld robot control device (3), identified by the first sensor (24.1) and the tablet computer (36) identified by the second sensor (24.2) with the robot control (8) as a first hand control device and a second hand control device for controlling a robot arm (25) controlled by the robot control (8).

3. Robot control panel according to claim 2, **characterized in that** the communication device (6) is designed to have at least one input means from the group of input means of the robot hand-held device (3) arranged on the robot hand-held device (3), comprising an emergency stop button (20), an operating mode selector switch (21), an approval button and a 3D / 6D mouse (19) for transmitting an input signal to the robot controller (8) on the basis of a manual input on the corresponding input device of the robot control handset (3) when the robot handheld device (3) is inserted in the first holder (2.1) of the robot control desk (1) and also safety-related inputs via the tablet computer (36) for transmission to the robot controller (8) when the tablet computer (36) is inserted in the second holder (2.2) of the robot control panel (1).

4. Pupitre de commande de robot selon la revendication 2 ou 3, carac-térisé en ce que le dispositif de communication (6) est conçu pour inclure au moins un moyen d'entrée du groupe de moyens d'entrée du dispositif portable robot (3), agencé sur le dispositif portable robot (3), comprenant un bouton d'arrêt d'urgence (20), un selecteur de mode de fonctionnement (21), un bouton d'approbation et une souris 3D / 6D (19) pour transmettre un signal d'entrée au commande de robot (8) sur la base d'une entree manuelle sur les moyens d'entrée correspondants du dispositif portatif de commande de robot (3) lorsque le dispositif portatif de robot (3) est inséré dans le premier support (2.1) du panneau de commande du robot (1) et pour empêcher les entrees relatives a la sécurité via l'ordinateur tablette (36) pour transmission a la commande du robot (8) lorsque l'ordinateur tablette (36) a été retire du deuxième support (2.2) de le panneau de commande du robot (1).

5. Combinaison de dispositif de commande de robot porta-tif selon l'une des revendications 1 a 4, **caractérisé en ce que** le capteur de position de terminal est un capteur d'acceleration de terminal (25.1) qui est conçu pour enregistrer des informations d ' acceleration du terminal mobile (17) dans au moins l'un des degrés de liberte et / ou le capteur de position de commande de base est un capteur d'acceleration de com-mande de base (25.2), qui est conçu pour detecter une acceleration du dispositif de commande de sécurité de base mobile (15) dans au moins un de ses degrés de liberte.

6. Robot control panel according to one of Claims 2 to 5, **characterized in that** the robot control panel (1) has a housing on which at least one input means from the group of input means is installed, comprising an emergency stop button (20), an operating mode selector switch (21), an approval button and a 3D / 6D mouse (19), for transmitting an input signal to the robot controller (8) based on a manual input on the corresponding input means of the robot control panel (1), and the communication device (6) is to allow safety-related inputs via the tablet computer (36) for transmission to the robot controller (8) when the tablet computer (36) is inserted in the second holder (2.2) of the robot control panel (1) and that at least one input means of the robot control desk (1) for transmitting an input signal to the robot control (8) on the basis of a manual input on the corresponding input means of the robot control desk (1) is switched.

7. Robot control panel according to one of Claims 2 to 6, having a wireless communication interface (39) which is designed for the control-related connection of a handheld control unit (7) of the handheld robot control (3) with the robot control (8), if the Robot handheld device (3) is removed from the first holder (2.1) of the robot control console (1).

8. Robot control console according to one of Claims 2 to 7, having a wireless communication interface (39) which is designed to connect the tablet computer controller (36.1) of the tablet computer (36) to the robot controller (8) when the Tablet computer (36) is removed from the second holder (2.2) of the robot control panel (1).

9. Robot control desk according to one of Claims 1 to 8, **characterized in that** the second holder (2.2) has a clamping device (37) which is designed to grip around two opposite edge sections (36a, 36b) of the tablet computer (36), when the tablet computer (36) is inserted in the second holder (2.2).

10. Robot control panel according to claim 9, **characterized in that** the clamping device (37) has a first clamping element (37.1) fastened to a housing (18) of the robot control panel (1) and one on the robot control panel (1) between a handling -rungsstellung and an extended position adjustably mounted second clamping element (37.2), wherein the first clamping element (37.1) and the second clamping element (37.2) are formed, the tablet computer (36) in the extended position of the second clamping element (37.2) on two opposite sides To grip edge sections (36a, 36b).

11. Robot control desk according to Claim 10, having a spring device (38) which is designed to mount the second clamping element (37.2) in its storage position in a prestressed manner.

12. Robot control panel according to one of Claims 9 to 11, comprising a diaphragm cap (27.4) which is releasably fastened to the housing (18) of the robot control panel (1) and which, in its state fastened to the housing (18), is connected to the housing (18) of the Complete the robot control panel (1) so that it is flush and visually cover the clamping device (37) when the tablet computer (36) is removed from the robot control panel (1) .

## Revendications

1. Panneau de commande du robot, comprenant:
- un premier support (2.1) qui est conçu pour contenir, de manière ajustée, un dispositif de commande de robot portatif séparément (3), qui peut être retiré du panneau de commande de robot (1),
- un deuxième support (2.2) qui diffère du premier support (2.1) et qui est conçu pour contenir, de manière ajustée, une tablette (36) portable séparément qui peut être retirée du panneau de commande du robot (1), et,
- un dispositif de communication (6) qui est conçu pour connecter une unité de commande portable (7) du dispositif de commande de robot portable (3) et une commande d'ordinateur tablette (36.1) de l'ordinateur tablette (36) avec un contrôleur de robot (8) en termes de technologie de contrôle,
**caractérisé en ce que** :
- un capteur (24) qui est conçu pour identifier un dispositif de commande de robot individuel (3) et / ou un ordinateur tablette (36) inséré dans le panneau de commande de robot (1), et le dispositif de communication (6) est conçu, l'unité de commande portable (7) du dispositif de commande de robot portable (3) et / ou la tablette (36) utilisée en fonction de l'unité de commande de robot portable (3) et / ou de la tablette (3) identifiée par le capteur (24) 36) à connecter en termes de technologie de commande à une commande de robot (8) affectée au dispositif de commande de robot individuel (3) et / ou à l'ordinateur tablette individuel (36).

2. Panneau de commande de robot selon la revendication 1, caracté-risé en ce que le dispositif de communication (6) est connecté techniquement par commande au moyen d'une connexion de communication (23) à un contrôleur de robot (8), le dispositif de communication (6)) comprend au moins un premier capteur (24.1) qui est conçu pour identifier un dispositif de commande de robot portatif (3) reçu sur le pupitre de commande du robot (1) et au moins un deuxième capteur (24.2) qui est conçu pour identifier une tablette (36), qui est reçu sur le pupitre de commande du robot (1), le dispositif de communication (6) étant également conçu pour enregistrer le dispositif de commande de robot portable (3), identifié par le premier capteur (24.1) et la tablette (36) identifié par le deuxième capteur (24.2) avec la commande de robot (8) comme un premier dispositif de commande manuelle et un deuxième dispositif de commande manuelle pour commander un bras de robot (25) commandé par la commande de robot (8).

3. Panneau de commande de robot selon la revendication 2, **caractérisé en ce que** le dispositif de communication (6) est conçu pour avoir au moins un moyen d'entrée du groupe de moyens d'entrée du dispositif portable robot (3) disposé sur le robot dispositif portatif (3), comprenant un bouton d'arrêt d'urgence (20), un sélecteur de mode de fonctionnement (21), un bouton d'approbation et une souris 3D / 6D (19) pour transmettre un signal d'entrée au contrôleur du robot (8) sur la base d'une entrée manuelle sur le dispositif d'entrée correspondant du combiné de commande du robot (3) lorsque le dispositif portatif du robot (3) est inséré dans le premier support (2.1) du pupitre de commande du robot (1)) ainsi que des entrées relatives à la sécurité via l'ordinateur tablette (36) pour transmission à la commande de robot (8) lorsque l'ordinateur tablette (36) est inséré dans le deuxième support (2.2) du panneau de commande du robot (1).

4. Combinaison de dispositif de commande de robot portatif selon l'une des revendications 1 à 3, **caractérisée en ce que** le capteur de position de terminal est un optocapteur de terminal qui est conçu pour détecter des informations d'image qui peuvent être enregistrées à partir du terminal mobile (17) dans au moins l'un parmi ses degrés de liberté et / ou le capteur de position de commande de base est un capteur optique de commande de base conçu pour acquérir des informations d'image qui peuvent être enregistrées par le dispositif de commande de base de sécurité mobile (15) dans au moins un de ses degrés de liberté.

5. Combinaison de dispositif de commande de robot porta-tif selon l'une des revendications 1 à 4, **caractérisé en ce que** le capteur de position de terminal est un capteur d'accélération de terminal (25.1) qui est conçu pour enregistrer des informations d ' accélération du terminal mobile (17) dans au moins l'un des degrés de liberté et / ou le capteur de position de commande de base est un capteur d'accélération de com-mande de base (25.2), qui est conçu pour détecter une accélération du dispositif de commande de sécurité de base mobile (15) dans au moins un de ses degrés de liberté.

6. Panneau de commande de robot selon l'une des revendications 2 à 5, **caractérisé en ce que** le panneau de commande de robot (1) présente un boîtier sur lequel est installé au moins un moyen d'entrée du groupe de moyens d'entrée, comprenant un bouton d'arrêt d'urgence. (20), un sélecteur de mode de fonctionnement (21), un bouton d'approbation et une souris 3D / 6D (19), pour transmettre un signal d'entrée au contrôleur de robot (8) sur la base d'une entrée manuelle sur le moyen d'entrée correspondant du panneau de commande du robot (1), et le dispositif de communication (6) doit permettre des entrées liées à la sécurité via l'ordinateur tablette (36) pour la transmission au contrôleur de robot (8) lorsque l'ordinateur tablette (36) est inséré dans le deuxième support (2.2) du panneau de commande du robot (1) et **en ce qu'**au moins un moyen d'entrée du pupitre de commande du robot (1) pour transmettre un signal d'entrée à la commande du robot (8) sur la base d'un manuel l'entrée sur les moyens d'entrée correspondants du pupitre de commande du robot (1) est commutée.

7. Panneau de commande de robot selon l'une des revendications 2 à 6, ayant une interface de communication sans fil (39) qui est conçue pour la connexion liée à la commande d'une unité de commande portable (7) de la commande de robot portable (3) avec le robot commande (8), si l'appareil portable Robot (3) est retiré du premier support (2.1) de la console de commande du robot (1).

8. Console de commande de robot selon l'une des revendications 2 à 7, ayant une interface de communication sans fil (39) qui est conçue pour connecter le contrôleur d'ordinateur tablette (36.1) de l'ordinateur tablette (36) au contrôleur ro-bot (8) lorsque l'ordinateur tablette (36) est retiré du second support (2.2) du panneau de commande du robot (1).

9. Pupitre de commande de robot selon l'une des revendications 1 à 8, **caractérisé en ce que** le deuxième support (2.2) présente un dispositif de serrage (37) qui est conçu pour s'agripper autour de deux tronçons de bord opposés (36a, 36b) de la tablette (36), lorsque la tablette (36) est insérée dans le deuxième support (2.2).

10. Panneau de commande de robot selon la revendication 9, caracté-risé en ce que le dispositif de serrage (37) a un premier élément de serrage (37.1) fixé à un boîtier (18) du panneau de commande de robot (1) et un sur la commande de robot. panneau (1) entre un échelon de manipulation et un deuxième élément de serrage (37.2) monté de manière réglable en position étendue, dans lequel le premier élément de serrage (37.1) et le deuxième élément de serrage (37.2) sont formés, la tablette (36) étant la position étendue du deuxième élément de serrage (37.2) sur deux côtés opposés pour saisir des sections de bord (36a, 36b).

11. Pupitre de commande de robot selon la revendication 10, comportant un dispositif à ressort (38) qui est conçu pour monter le deuxième élément de serrage (37.2) dans sa position de stockage de manière précontrainte.

12. Panneau de commande de robot selon l'une des revendications 9 à 11, comprenant un capuchon de membrane (27.4) qui est fixé de manière amovible au boîtier (18) du panneau de commande de robot (1) et qui, dans son état, est fixé au boîtier (18), est connecté au boîtier (18) du panneau de commande complet du robot (1) de sorte qu'il affleure et couvre visuellement le dispositif de serrage (37) lorsque la tablette électronique (36) est retirée du panneau de commande du robot (1).
